# EUROPÄISCHE PATENTSCHRIFT

(11) **EP 3 599 154 B1**
(45) Veröffentlichungstag und Bekanntmachung des Hinweises auf die Patenterteilung: **31.03.2021**
(21) Anmeldenummer: 19180302.2
(22) Anmeldetag: 14.06.2019
(51) Int. Cl.: B62M 6/55, B62M 11/14, F16H 63/30, B62M 6/45

(54) **ANTRIEBSANORDNUNG UND FAHRZEUG**
DRIVE ASSEMBLY AND VEHICLE
AGENCEMENT D'ENTRAÎNEMENT ET VÉHICULE

(30) Priorität: 25.07.2018 DE 102018212435
(43) Veröffentlichungstag der Anmeldung: 29.01.2020
(73) Patentinhaber: Robert Bosch GmbH, 70442 Stuttgart (DE)
(72) Erfinder: Hinterkausen, Markus, 71696 Moeglingen (DE); Kimmich, Peter, 71144 Steinenbronn (DE)

(56) Entgegenhaltungen:
- EP-A1- 2 526 012
- CA-A- 666 241
- GB-A- 885 942
- JP-A- S6 084 444
- JP-A- H10 194 186

## Beschreibung

### Stand der Technik

Die vorliegende Erfindung betrifft eine Antriebsanordnung und ein Fahrzeug. Die vorliegende Erfindung betrifft insbesondere eine Antriebsanordnung eines mit Muskelkraft und/oder - gegebenenfalls zusätzlich - mit Motorkraft antreibbaren Fahrzeuges, eines Elektrofahrrades, eBikes, Pedelecs oder dergleichen sowie ein mit Muskelkraft und/oder - gegebenenfalls zusätzlich - mit Motorkraft antreibbares Fahrzeug, ein Elektrofahrrad, eBike, Pedelec oder dergleichen.

Oft werden Fahrräder, Elektrofahrräder und dergleichen am angetriebenen Hinterrad mit einer Ketten- oder Nabenschaltung ausgebildet. Alternativ dazu können auch Tretlagerantriebe mit einem integrierten Schaltgetriebe vorgesehen werden.

Problematisch ist bei bekannten Antriebsanordnungen mit am Tretlager angeordneten Schaltgetrieben deren gesteigerte Größe und/oder ihr mangelnder Wirkungsgrad. Dies betrifft insbesondere am Tretlagerantrieb ausgebildete Reibringgetriebe, Schaltgetriebe mit Hohlwellenmotor oder dergleichen. Auch ist ein Mangel an Lastschaltfähigkeit, Zugkraftunterbrechungsfreiheit und das Auftreten von Leerwegen bei bekannten Antriebsanordnungen nachteilig. Des Weiteren ist bei Ansätzen mit formschlüssigen Schaltmechaniken, die diese Nachteile vermeiden sollen, problematisch, dass die Übergänge zwischen Schaltgängen ruckartig erfolgen, was einem geschmeidigen Bewegungsablauf entgegensteht und als unangenehm empfunden wird.

Dokument JPH1010194186 stellt den nächsten Stand der Technik dar und beschreibt eine Antriebsanordnung für ein mit Muskelkraft und/oder - insbesondere zusätzlich - mit Motorkraft antreibbares Fahrzeug, ein Elektrofahrrad, eBike oder Pedelec,mit:- einer um eine Drehachse drehbaren Kurbelwelle zum Aufnehmen eines ersten und insbesondere mit Muskelkraft erzeugten Drehmomentes und- einer Übertragungseinrichtung, welche zum Übertragen des ersten Drehmomentes von der Kurbelwelle an ein mit einem Antriebsrad des Fahrzeuges koppelbares Abtriebselement und mittels eines - insbesondere automatisch - schaltbaren mehrstufigen Planetengetriebes zu einer variablen Übersetzung ausgebildet ist, bei welcher:- die Übersetzung des Planetengetriebes über einen Gangwechsel und durch gesteuertes Verbinden und/ oder Freigeben jeweiliger Hohlräder entsprechender Planetenstufen über ein mit dem jeweiligen Hohlrad drehfest gekoppeltes Mitnehmerelement einstellbar ist,- das jeweilige Mitnehmerelement über einen steuerbaren Reibschluss mit einem Bremselement steuerbar abbremsbar und arretierbar und/oder freigebbar ist und- ein jeweiliges Bremselement ein Bremsband einer Bandbremse ist oder aufweist.

### Offenbarung der Erfindung

Die erfindungsgemäße alternative Antriebsanordnung mit den Merkmalen des Anspruchs 1 weist demgegenüber den Vorteil auf, dass bei vergleichsweise weiter verkleinertem Bauraum im Bereich des Tretlagers die Drehmomentübertragung mit einem vergleichsweise hohen Wirkungsgrad, das heißt bei reduzierten Verlusten, und darüber hinaus auch unter Last und somit ohne Unterbrechung der Zugkraft bei besonders geringen oder gar verschwindenden Leerwegen und bei ruckarmen oder ruckfreien Schaltübergängen erfolgen kann. Dies wird erfindungsgemäß mit den Merkmalen des unabhängigen Anspruches 1 dadurch erreicht, dass eine Antriebsanordnung geschaffen wird für ein mit Muskelkraft und/oder - insbesondere zusätzlich - mit Motorkraft antreibbares Fahrzeug, insbesondere für ein Elektrofahrrad, eBike, Pedelec oder dergleichen, mit einer um eine Drehachse drehbaren Kurbelwelle zum Aufnehmen eines ersten und insbesondere mit Muskelkraft erzeugten Drehmomentes und mit einer Übertragungseinrichtung, welche zum Übertragen des ersten Drehmomentes von der Kurbelwelle an ein mit einem Antriebsrad des Fahrzeuges koppelbares Abtriebselement und mittels eines - insbesondere automatisch - schaltbaren mehrstufigen Planetengetriebes zu einer variablen Übersetzung ausgebildet ist. Erfindungsgemäß ist die Übersetzung des Planetengetriebes über einen Gangwechsel und durch gesteuertes Verbinden und/oder Freigeben jeweiliger Sonnenräder entsprechender Planetenstufen über ein mit dem jeweiligen Sonnenrad drehfest gekoppeltes Mitnehmerelement einstellbar. Ein jeweiliges Mitnehmerelement ist über einen steuerbaren Reibschluss mit einem Bremselement steuerbar abbremsbar und arretierbar oder freigebbar. Ferner ist ein jeweiliges Bremselement erfindungsgemäß besonders zuverlässig als Bremsband einer Bandbremse ausgebildet oder weist ein derartiges Bremsband auf. Die Verwendung eines Planetengetriebes als formschlüssiges Getriebe erzielt einen besonders hohen Wirkungsgrad beim Übertragen des Drehmoments in Abtriebsrichtung. Darüber hinaus ist durch das Vorsehen von mit den jeweiligen Sonnenrädern drehfest gekoppelten Mitnehmerelementen außerhalb des jeweils gekoppelten Sonnenrades ein besonders zuverlässiges Verbinden, Blockieren oder Sperren und/oder Freigeben oder Entsperren der jeweiligen Sonnenräder möglich, weil auf Grund der achsenfernen Anordnung der Mitnehmerelemente und auf Grund der dadurch bei gleichem Moment reduzierten Kräfte mit besonders geringen Ausfällen und Verschleißerscheinungen zu rechnen ist. Schließlich gewährleistet die steuerbare Bremsbarkeit/Arretierbarkeit und Freigebbarkeit eines jeweiligen Mitnehmerelements über Reibschluss die Ruckfreiheit der Schaltübergänge, wobei durch die Ausbildung jeweiliger Bremselemente als Bremsband oder mit einem Bremsband einer Bandbremse ein besonders hohes Maß an Betriebszuverlässigkeit und Kompaktheit der Bauform erzielt wird.

Die Unteransprüche zeigen bevorzugte Weiterbildungen der Erfindung.

Das erfindungsgemäße Prinzip des steuerbaren Reibschlusses zwischen Mitnehmerelement und Bremselement zur Arretierung und Freigabe von Mitnehmerelement und Bremselement mittels Bremsbänder einer steuerbaren Bandbremse lässt sich mit vielfältigen konstruktiven Details realisieren.

Bei einer besonders zuverlässigen Weiterbildung der erfindungsgemäßen Antriebsanordnung ist ein jeweiliges Mitnehmerelement an einem oder als ein radial außen liegender oder äußerster Abschnitt einer mit dem jeweiligen Sonnenrad drehfest gekoppelten Bremsscheibe und/oder Bremstrommel ausgebildet, insbesondere mit einer Kreisform oder Kreisringform im Querschnitt oder in Draufsicht in bzw. mit einer Ebene senkrecht zu einer Rotationsachse der Bremsscheibe bzw. Bremstrommel. Auf diese Weise kann die Struktur des Mitnehmerelements unabhängig von der Kopplung an das Sonnenrad in geeigneter Weise ausgestaltet werden, um einen Gangwechsel besonders zuverlässig auszuführen.

Ein besonders hohes Maß an Flexibilität und Zuverlässigkeit des Einsatzes der erfindungsgemäßen Antriebsanordnung ergibt sich bei einer vorteilhaften Weiterbildung, wenn für ein jeweiliges Mitnehmerelement ein Bremsband in Eins-zu-eins-Zuordnung ausgebildet ist. Das bedeutet insbesondere, dass für jedes Mitnehmerelement genau ein Bremselement in Form eines Bremsbandes vorliegt und diesem fest zugeordnet und mit diesem über Reibschluss koppelbar ist.

Die Betätigung der Bremsbänder kann in mannigfacher Weise realisiert sein oder werden.

Besonders einfache Verhältnisse stellen sich hinsichtlich des Aufbaus der erfindungsgemäßen Antriebsanordnung dann ein, wenn erfindungsgemäss für ein jeweiliges Bremsband eine Stelleinrichtung, insbesondere als Spanneinrichtung zum Spannen und Lösen eines jeweiligen zugeordneten Bremsbandes, ausgebildet und so betätigbar eingerichtet ist, dass ein zugeordnetes Bremsband (a) in mindestens einen mit dem zugeordneten Mitnehmerelement in Eingriff stehenden und/oder reibenden Zustand und (b) in mindestens einen mit dem zugeordneten Mitnehmerelement außer Eingriff stehenden und/oder nicht reibenden Zustand überführbar ist. Das kann insbesondere bedeuten, dass in einem mechanisch gespannten Zustand des Bremsbandes ein Reibschluss zwischen Bremsband als Bremselement und dem zugeordneten Mitnehmerelement vorliegt und im mechanisch nicht gespannten Zustand des Bremsbandes ein Reibschluss zwischen Bremsband und dem zugeordneten Mitnehmerelement nicht vorliegt, das Bremsband und das zugeordnete Mitnehmerelement mechanisch also voneinander gelöst sind.

Es ist alternativ jedoch auch eine umgekehrte Situation grundsätzlich denkbar, bei welcher ein mechanisches Spannen des Bremsbandes das Bremsband vom zugeordneten Mitnehmerelement mechanisch löst, wogegen das Bremsband im nicht gespannten Zustand am Mitnehmerelement in Reibschluss anliegt.

Es sind vielfältige Mechanismen zur Betätigung der Bremsbänder denkbar, insbesondere auch solche, die bei herkömmlichen Bandbremsen und in anderen technischen Gebieten zum Einsatz kommen.

Es ergibt sich jedoch ein besonders zuverlässiger Betrieb für die erfindungsgemäße Antriebsanordnung, indem eine jeweilige Stelleinrichtung ein Stellelement, eine

Drehwelle oder Schwenkwelle, an welcher das Stellelement drehfest montiert ist, und einen Antrieb zum steuerbaren Antreiben der Drehwelle oder Schwenkwelle zum Verschwenken und/oder zur Rotation um eine Drehachse oder Schwenkachse aufweist, wobei die Bewegung und also das Verschwenken insbesondere in temporärer Art und Weise zur Einstellung eines Positionswinkels eines jeweiligen Stellelements erfolgt.

Dabei weist ein jeweiliges Stellelement in Bezug auf die Drehwelle oder Schwenkwelle in einer Umfangsrichtung zur Bestimmung eines in Eingriff stehenden und/oder reibenden Zustands und eines außer Eingriff stehenden und/oder nicht reibenden Zustands bevorzugt eine unterschiedliche radiale Ausdehnung auf, insbesondere nach Art eines exzentrischen Elements oder Exzenters. Durch die unterschiedliche radiale Ausdehnung eines jeweiligen Stellelements wird ein Kontakt mit einem zugeordneten Bremsband zu dessen mechanischer Spannung oder Straffung oder zu dessen mechanischen Lösen bewirkt oder vermieden, insbesondere in einer vom Drehwinkel oder Schwenkwinkel abhängigen Art und Weise.

Die Mehrzahl von Stellelementen kann bei einer besonders kompakten Bauform der erfindungsgemäßen Antriebsanordnung auf einer gemeinsamen Drehwelle oder Schwenkwelle drehfest angeordnet und über einen gemeinsamen Antrieb steuerbar zur Rotation und/oder zum Verschwenken - insbesondere in temporärer Art und Weise - antreibbar sein.

Alternativ dazu können für Gruppen von Stellelementen oder für sämtliche Stellelemente individuelle Drehachsen oder Schwenkachsen mit entsprechenden Drehwellen bzw. Schwenkwellen und entsprechende individuelle Antriebe definiert und ausgebildet sein oder werden, so dass sich ein besonders hohes Maß an individueller Ansteuerung einstellt und/oder der zur Verfügung stehende Bauraum durch entsprechende Anordnung der Wellen und Antriebsmechanismen besonders flexibel genutzt werden kann.

Die Stellelemente können mit ihren unterschiedlichen radialen Ausdehnungen bezüglich der gemeinsamen Drehwelle oder Schwenkwelle und ihren Anordnungen auf der gemeinsamen Drehwelle oder Schwenkwelle winkelmäßig in Umfangsrichtung für eine vorgegebene Gangwahlabfolge oder Gangabfolge relativ zueinander angeordnet sein.

In diesem Zusammenhang ist es von besonderem Vorteil, wenn ein jeweiliges Stellelement zu einem oder für einen direkten und unmittelbaren Eingriff auf ein zugeordnetes Bremsband zum Erzeugen eines gespannten bzw. eines gelösten Zustands des Bremsbandes in Bezug auf ein zugeordnetes Mitnehmerelement eingerichtet ist. Durch diese Maßnahmen ergibt sich ein besonders hohes Maß an Kompaktheit der Bauform.

Alternativ dazu kann es vorgesehen sein, dass ein jeweiliges Stellelement zu einem oder für einen indirekten und mittelbaren Eingriff auf ein zugeordnetes Bremsband zum Erzeugen eines gespannten bzw. eines gelösten Zustands des Bremsbandes in Bezug auf ein zugeordnetes Mitnehmerelement eingerichtet ist, insbesondere mittels eines über das Stellelement betätigbaren Hebelmechanismus zum Spannen bzw. Entspannen des Bremsbandes. Auf diese Art und Weise lässt sich ein besonders hoher Wirkungsgrad beim Aufprägen der Bremskräfte erzielen.

Gemäß einem besonders vorteilhaften Ausführungsbeispiel der vorliegenden Erfindung weist die Antriebsanordnung zwischen einem Antrieb einerseits und einer Schwenkwelle und/oder einem Stellelement andererseits und ausgangsseitig zum jeweiligen Antrieb ein Getriebe, insbesondere mit Selbsthemmung, und/oder ein Gesperre, insbesondere mit einer Haltefunktion, auf. Getriebe und Gesperre können für Schwenkwellen und/oder Stellelemente individuell, gruppenweise individuell oder für sämtliche Stellelemente in Bezug auf eine gemeinsame Schwenkwelle gemeinsam ausgebildet sein.

Zur Vermeidung von Leerwegen der Tretkurbeln ohne Leistungsübertragung vom Fahrer zu einem Abtriebselement bei allen Schaltvorgängen durch eine Umlaufzeit der Mitnehmerelemente ist es in vorteilhafterweise bei einer Weiterbildung vorgesehen, dass mehrere Mitnehmerelemente über einen mechanisch selbstschaltenden Freilauf mit einem jeweiligen Sonnenrad verbunden sind, insbesondere im Zusammenhang mit einem Drehrichtungswechsel der zugehörigen Sonnenräder bei einem Gangwechsel und/oder mit einem Festhalten der jeweiligen Mitnehmerelemente in beiden Drehrichtungen, insbesondere durch eine Betätigeranordnung.

Einige Mitnehmerelemente können also über einen mechanisch selbstschaltenden Freilauf mit einem zugehörigen Sonnenrad verbunden sein.

Das jeweilige Mitnehmerelement kann bei bevorzugten Ausführungsformen der vorliegenden Erfindung radial und/oder axial außerhalb zumindest des jeweils gekoppelten Sonnenrades angeordnet sein, insbesondere in Bezug auf die Drehachse des Sonnenrades. Zusätzlich oder alternativ kann das jeweilige Mitnehmerelement in Bezug auf die Drehachse des Sonnenrades auch radial innerhalb, aber axial außerhalb des Sonnenrades ausgebildet sein. Bei größeren Sonnenrädern können sich die Mitnehmerelemente innerhalb des Radius der Sonnenräder, aber seitlich davon beabstandet befinden und dennoch im Vergleich zu den üblichen Klinken oder Ziehkeilen achsfern mit den entsprechenden Vorteilen bezüglich der Kräfte angeordnet sein.

Des Weiteren ist bei einer vorteilhaften Weiterbildung eine koaxiale Anordnung des mehrstufigen Planetengetriebes zur Drehachse und somit zur Kurbelwelle besonders platzsparend und führt zu einer vergleichsweise kompakten Bauform.

Die kompakte Bauweise der erfindungsgemäßen Antriebsanordnung im Sinne eines Tretlagerschaltgetriebes kann alternativ oder zusätzlich gesteigert werden, indem das Planetengetriebe auch zu einem rotationssymmetrisch ausgebildeten Abtriebselement koaxial ausgebildet wird, so dass sich eine Anordnung ergibt, bei welcher das Abtriebselement als rotationssymmetrische Komponente koaxial zur Drehachse der Kurbelwelle und zum Planetengetriebe ausgebildet ist. Das Abtriebselement kann vorzugsweise als Kettenblatt oder Zahnriemenblatt, je nach Antriebsart, ausgebildet sein.

Eine weitere Fortbildung der erfindungsgemäßen Antriebsanordnung weist eine erweiterte Anzahl an Gängen und/oder an schaltbaren Übersetzungen auf, nämlich durch den Einsatz von einem oder von mehreren Freiläufen, insbesondere für die Realisierung einer Übersetzung von 1:1, in einem Stufenplanetengetriebe mit einer Übersetzung ins Schnelle und/oder in der Gesamtübersetzung durch einen Direktgang. Dabei kann es insbesondere vorgesehen sein, dass diese Übersetzungen nicht aktiv schaltbar, sondern mechanisch selbstschaltend ausgebildet sind.

Eine besonders bequeme Handhabung ergibt sich für den Anwender dann, wenn gemäß einer bevorzugten Ausführungsform der erfindungsgemäßen Antriebsanordnung das Planetengetriebe eine Mehrzahl von Gängen definiert, insbesondere mit einer Anzahl von sieben Gängen, mit Gangsprüngen, die konstant sind, nicht mehr als im Mittel etwa 26 % betragen und/oder im Einzelfall im Bereich von etwa 25 % bis etwa 27 % liegen, eine Gesamtspreizung von etwa 400 % definieren und/oder im Zusammenhang stehen mit einem zusätzlichen Direktgang und dem Einsatz eines Freilaufes, durch welchen in einem Planetengetriebe mit einer Übersetzung ins Schnelle ein Sonnenrad mit einem Planetensteg verbindbar ist. Jedoch sind auch andere Ausgestaltungen denkbar.

Verluste auf Grund von Reibung und dergleichen lassen sich in geeigneter Weise kontrollieren, indem das Planetengetriebe mit einer entsprechenden Zahl von Schaltgetriebeschaltstufen ausgebildet wird, beispielsweise mit höchstens vier Schaltgetriebeschaltstufen. Es sind jedoch auch andere Anzahlen von Schaltgetriebeschaltstufen realisierbar.

Bei einer konkreten Ausgestaltungsform der erfindungsgemäßen Antriebsanordnung ist es vorgesehen, dass die Getriebeschaltstufen gebildet werden von (i) einem ersten und insbesondere zweistufigen Planetengetriebe mit Gesamtübersetzung ins Schnelle und (ii) einem dazu in Reihe geschalteten zweiten und insbesondere zweistufigen Planetengetriebe mit Gesamtübersetzung ins Langsame, insbesondere einem Planetengetriebe in der Form eines Stufenplanetengetriebes, d.h. mit Planetenrädern, welche mehrere Stufen aufweisen, die drehfest miteinander verbunden sind.

Dabei kann den Getriebeschaltstufen insbesondere (iii) eine Hochtreiberstufe mit einem oder in Form eines Planetengetriebes mit Übersetzung ins Schnelle zur Reduktion eines hohen Fahrerdrehmomentes eingangsseitig vorgeschaltet sein.

Alternativ oder zusätzlich können (iv) die beiden in Reihe geschalteten Planetengetriebe der Getriebeschaltstufen über ein gemeinsames Hohlrad miteinander gekoppelt sein.

Bei einer anderen vorteilhaften Ausgestaltungsform der erfindungsgemäßen Antriebsanordnung wird ein besonders zuverlässiger Gangwechsel ermöglicht, indem dieser über eine Betätigeranordnug durchführbar ist, bei welcher für jedes Bremsband als Bremselement ein steuerbarer Betätiger zugeordnet ausgebildet ist, durch welchen das zugeordnete Bremsband steuerbar reibschlüssig mit einem dem Bremsband zugeordneten Mitnehmerelement in Eingriff bringbar ist.

Die vorliegende Erfindung lässt sich nicht nur bei rein mit Muskelkraft betriebenen Fahrzeugen, z.B. bei klassischen Fahrrädern, anwenden, sondern insbesondere bei Elektrofahrrädern, eBikes, Pedelecs oder dergleichen, wie dies eingangs bereits erwähnt wurde.

Bei einer bevorzugten Ausführungsform der erfindungsgemäßen Antriebsanordnung ist es daher vorgesehen, dass ein elektrischer Antrieb zum Erzeugen eines Motordrehmoments ausgebildet ist und dass der elektrische Antrieb zum Übertragen des Motordrehmomentes über das Planetengetriebe steuerbar an das Abtriebselement koppelbar ist.

Bei einer besonders vorteilhaften Weiterbildung der erfindungsgemäßen Antriebsanordnung weist der elektrische Antrieb einen Hohlwellenmotor mit einer ausgangsseitigen Hohlwelle auf.

Dabei kann der Hohlwellenmotor insgesamt oder zumindest mit seiner Hohlwelle koaxial zur Drehachse der Kurbelwelle, zum Planetengetriebe, zum eingangsseitigen Planetensteg des Planetengetriebes und/oder zu einem Sonnenrad einer etwaig vorgesehenen Hochtreiberstufe angeordnet und ausgebildet sein.

Zusätzlich oder alternativ kann die Hohlwelle des Hohlwellenmotors mittelbar, zum Beispiel über ein Motorreduziergetriebe, oder unmittelbar mit dem eingangsseitigen Planetensteg des Planetengetriebes und/oder mit dem Sonnenrad einer etwaig vorgesehenen Hochtreiberstufe gekoppelt oder koppelbar sein, insbesondere in steuerbarer Weise.

Dabei können die Ankopplung des elektrischen Antriebes und somit die Übertragung des Motordrehmomentes von der Motorwelle auf das Planetengetriebe in verschiedener Art und Weise realisiert sein.

Bei einer bevorzugten Ausgestaltungsform der erfindungsgemäßen Antriebsanordnung ist es vorgesehen, dass zwischen dem elektrischen Antrieb und dem Planetengetriebe ein Motorreduziergetriebe ausgebildet ist, zum Beispiel in Form eines mehrstufigen Stirnradgetriebes, eines Planetengetriebes oder eines Stufenplanetengetriebes, mit koaxialer Anordnung zur Hohlwelle des Hohlwellenmotors, zur Drehachse der Kurbelwelle, zum Planetengetriebe, zum eingangsseitigen Planetensteg des Planetengetriebes und/oder zum Sonnenrad einer etwaig vorgesehenen Hochtreiberstufe und/oder in im Hohlwellenmotor integrierter Form.

Ein hinsichtlich der radialen Ausdehnung besonders kompakter Aufbau ergibt sich, wenn gemäß einer alternativen Ausgestaltungsform der erfindungsgemäßen Antriebsanordnung zwischen dem elektrischen Antrieb und dem Planetengetriebe ein Motorreduziergetriebe in Form eines Evoloidgetriebes ausgebildet ist. Dieses kann innen- oder außenverzahnt ausgebildet sein.

Unabhängig von der Art und Weise, wie das Motorreduziergetriebe konfiguriert ist, ist es von besonderem Vorteil, wenn ein, mehrere oder sämtliche Komponenten des jeweiligen Motorreduziergetriebes mit oder aus einem Kunststoffmaterial gefertigt sind. Damit lassen sich die Betriebsgeräusche und/oder deren Übertragung bei der erfindungsgemäßen Antriebsanordnung weiter reduzieren.

Besonders bevorzugt ist eine Antriebsanordnung, welche den Aufbau eines Mittelmotorantriebs aufweist und insbesondere ein gemeinsames Gehäuse umfasst, in welchem das Planetengetriebe, der Stellantrieb, der elektrische Antrieb, das Motoreduziergetriebe und - zumindest teilweise - die Kurbelwelle aufgenommen sind.

Die vorliegende Erfindung betrifft des Weiteren ein mit Muskelkraft und/oder - insbesondere zusätzlich - mit Motorkraft antreibbares Fahrzeug und insbesondere ein Elektrofahrrad, eBike, Pedelec oder dergleichen. Das erfindungsgemäße Fahrzeug weist mindestens ein Rad auf sowie eine erfindungsgemäß ausgebildete Antriebsanordnung, mit welcher das mindestens eine Rad des Fahrzeuges antreibbar ist.

### Kurzbeschreibung der Figuren

Unter Bezugnahme auf die beigefügten Figuren werden Ausführungsformen der Erfindung im Detail beschrieben.
- Figur 1: ist eine schematische Darstellung eines Beispiels eines Fahrzeuges nach Art eines Elektrofahrrades, bei welchem eine erste Ausführungsform der Erfindung realisiert ist.
- Figur 2: ist eine schematische Draufsicht auf eine Ausführungsform der erfindungsgemäßen Antriebsanordnung mit Kurbeltrieb und mit elektrischem Antrieb, bei welcher vorgesehene Bremsbänder über Stellelemente auf einer gemeinsamen Schwenkachse steuerbar betätigbar sind.
- Figuren 3 und 4: zeigen in schematischer und teilweise geschnittener Seitenansicht eine Bremseinheit, die bei einer Ausführungsform der erfindungsgemäßen Antriebsanordnung eingesetzt werden kann, und zwar in einem außer Eingriff stehenden Zustand und in einem außer Eingriff zustehenden Zustand zwischen Bremsband und Mitnehmerelement.
- Figuren 5 bis 11: zeigen in schematischen und teilweisen geschnittenen Seitenansichten eine Ausführungsform der erfindungsgemäß verwendeten Bremseinheit, bei welcher vier vorgesehene Kombinationen aus Bremsband und Stellelement in verschiedenen Betätigungszuständen dargestellt sind.
- Figur 12: ist eine schematische Draufsicht auf eine andere Ausführungsform der erfindungsgemäßen Antriebsanordnung mit Kurbeltrieb und mit elektrischem Antrieb, bei welcher vorgesehene Bremsbänder über Stellelemente auf individuellen Schwenkachsen steuerbar betätigbar sind.
- Figuren 13 und 14: zeigen in schematischer und teilweise geschnittener Seitenansicht andere Ausführungsformen von Stellelementen zur unmittelbaren und direkten Betätigung eines zugeordneten Bremsbands.
- Figuren 15 und 16: zeigen in schematischer und teilweise geschnittener Seitenansicht eine Kombination aus Bremseinheit und Mitnehmerelement, bei welcher ein vorhandenes Stellelement zur indirekten und nur mittelbaren Ansteuerung eines Bremsbandes ausgebildet ist, nämlich vermittelt über einen Hebelmechanismus.
- Figur 17: zeigt in schematischer und geschnittener Seitenansicht ein erfindungsgemäß verwendbares Mitnehmerelement mit einer Speichenkonfiguration zur Gewichtseinsparung.

### Bevorzugte Ausführungsformen der Erfindung

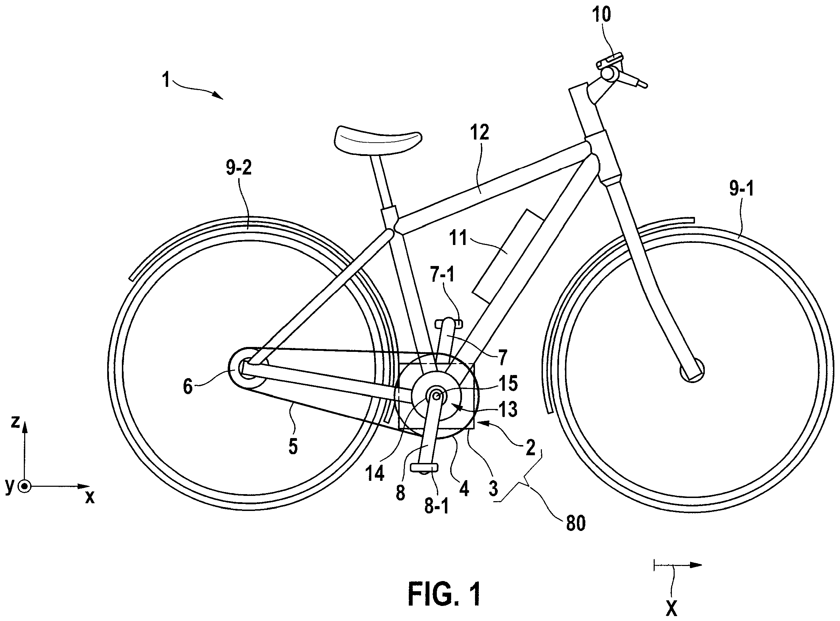

Nachfolgend werden unter Bezugnahme auf die Figuren 1 bis 8 Ausführungsbeispiele der Erfindung im Detail beschrieben. Gleiche und äquivalente sowie gleich oder äquivalent wirkende Elemente und Komponenten werden mit denselben Bezugszeichen bezeichnet. Nicht in jedem Fall ihres Auftretens wird die Detailbeschreibung der bezeichneten Elemente und Komponenten wiedergegeben.

Die dargestellten Merkmale und weitere Eigenschaften können in beliebiger Form voneinander isoliert und beliebig miteinander kombiniert werden, ohne den Kern der Erfindung zu verlassen.

Zunächst wird unter Bezugnahme auf Figur 1 beispielhaft ein Elektrofahrrad als eine bevorzugte Ausführungsform des erfindungsgemäßen Fahrzeugs 1 im Detail beschrieben.

Das Fahrzeug 1 umfasst als Elektrofahrrad einen Rahmen 12, an dem ein Vorderrad 9-1, ein Hinterrad 9-2 und ein Kurbeltrieb 2 mit zwei Kurbeln 7, 8 mit Pedalen 7-1 und 8-1 angeordnet sind. Ein elektrischer Antrieb 3 ist in den Kurbeltrieb 2 integriert. Am Hinterrad 9-2 ist ein Ritzel 6 angeordnet.

Ein Antriebsmoment, welches durch den Fahrer und/oder durch den elektrischen Antrieb 3 bereitgestellt wird, wird von einem Kettenblatt 4 am Kurbeltrieb 2 über eine Kette 5 auf das Ritzel 6 übertragen.

Am Lenker des Fahrzeuges 1 ist ferner eine Steuereinheit 10 angeordnet, welche mit dem gegebenenfalls ausgebildeten elektrischen Antrieb 3 verbunden ist. Im oder am Rahmen 12 ist ferner eine Batterie 11 ausgebildet, welche zur Stromversorgung des elektrischen Antriebes 3 dient.

Im Rahmen 12 integriert ist ein Kurbellager 13 oder Tretlager, welches ein Kurbelgehäuse 14 und eine Kurbelwelle 15 aufweist.

Die erfindungsgemäße Antriebsanordnung 80 des erfindungsgemäßen Fahrzeuges 1 aus Figur 1 weist den Kurbeltrieb 2 und den elektrischen Antrieb 3 auf, wobei die von diesen erzeugbaren Drehmomente über eine entsprechende und in Figur 1 nicht dargestellte Übertragungseinrichtung 20 mit einem schaltbaren mehrstufigen Planetengetriebe 21 aufnehmbar und an das Kettenblatt als Abtriebselement 4 übertragbar sind.

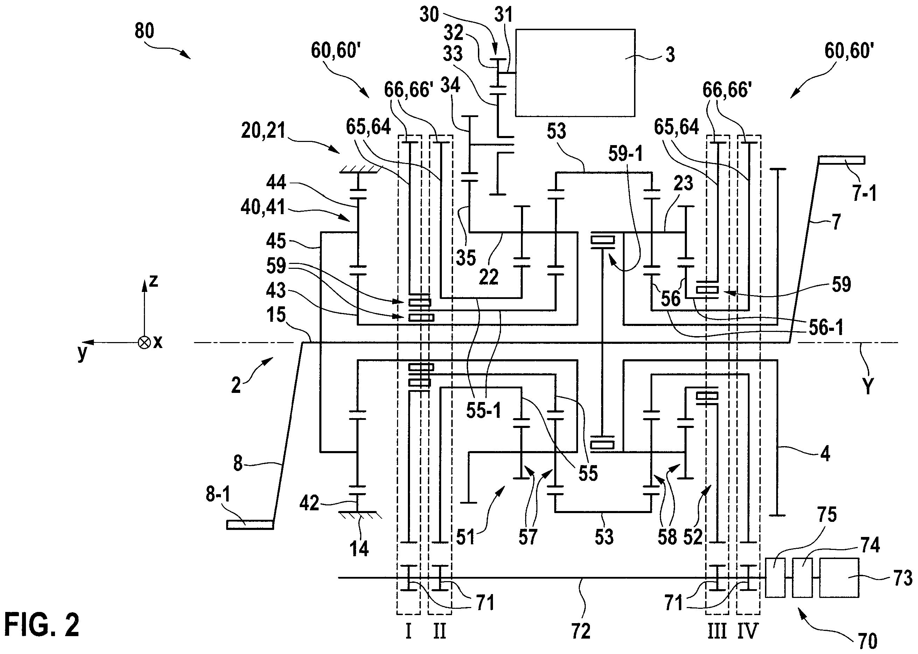

Figur 2 ist eine schematische Draufsicht auf eine Ausführungsform der erfindungsgemäßen Antriebsordnung 80 mit einem elektrischen Antrieb 3 und einem Kurbeltrieb 2.

Zur Übertragung von Drehmomenten vom Kurbeltrieb 2 und vom elektrischen Antrieb 3 ist eine Übertragungseinrichtung 20 ausgebildet, welche ein mit einem koaxial zu der durch die Kurbelwelle 15 definierten Drehachse Y angeordnetes Planetengetriebe 21 aufweist.

Das Planetengetriebe 21 besteht aus einer Hochtreiberstufe 40 mit einem Planetengetriebe 41 der Hochtreiberstufe 40 einerseits und einem mehrstufigen Schaltgetriebe 50 andererseits, welches ausgebildet ist (a) mit einem ersten und hier zweistufigen Planetengetriebe 51, nämlich eingangsseitig, der Hochtreiberstufe 40 zugewandt und vom Abtriebselement 4 abgewandt, und (b) einem zweiten und hier zweistufigen Planetengetriebe 52, nämlich ausgangsseitig, dem Abtriebselement 4 zugewandt und der Hochtreiberstufe 40 abgewandt.

Die ersten und zweiten Planetengetriebe 51 und 52 des Schaltgetriebes 50 weisen entsprechende erste und zweite Sonnenräder 55 bzw. 56 und den Sonnenrädern 55, 56 zugeordnete Planetenräder 57 bzw. 58 auf, die an Planetenstegen 22, 23 gelagert und über ein gemeinsames Hohlrad 53 gekoppelt sind.

Über lösbare Verbindungen wird die Verbindung der Sonnenräder 55, 56 mit dem Gehäuse 14 der Antriebsordnung 80 in gesteuerter Art und Weise bewirkt. Dies geschieht bei der Ausführungsform gemäß Figur 2 über das gesteuert schaltbare Sperren oder Freigeben der mit den Sonnenrädern 55, 56 drehfest verbundenen und umlaufenden Mitnehmerelemente 64.

Allgemein ist ein jeweiliges Mitnehmerelement 64 erfindungsgemäß dazu ausgebildet mit einem zugeordneten Bremselement 66, welches erfindungsgemäß als Bremsband 66' ausgebildet ist, steuerbar reibschlüssig in Wechselwirkung zu treten und steuerbar abbremsbar und arretierbar und freigebbar zu sein.

Bei der in Figur 2 gezeigten Antriebsanordnung 80 weist ein jeweiliges Mitnehmerelement 64 eine Bremsscheibe 65 oder Bremstrommel auf oder ist insgesamt als eine Bremsscheibe 65 oder Bremstrommel ausgebildet.

Als Bremselement 66 in Zuordnung zu einem jeweiligen Mitnehmerelement 64 ist bei der in Figur 2 gezeigten erfindungsgemäßen Antriebsanordnung 80 eine steuerbar betätigbare Bremseinheit 60 oder Bremse mit einer oder als eine Bandbremse 60' ausgebildet, welche für jedes Mitnehmerelement 64 ein Bremsband 66' als Bremselement und eine gemeinsame Stelleinrichtung 70 zur Betätigung eines jeweiligen Bremsbandes 66' aufweist.

Die gemeinsame Schwenkwelle 72 der Stelleinrichtung 70 zu Betätigung Bandbremse 66' ist mittels eines Antriebs 73 unter Zwischenschaltung eines Getriebes 74 und/oder eines Gesperres 75 für eine um einen Schwenkwinkel definierte Schwenkbewegung eingerichtet. Durch die gemeinsame Schwenkbewegung um die durch die gemeinsame Schwenkwelle 72 definierte gemeinsame Schwenkachse werden die Stellelemente 71 gemeinsam um denselben vorgegebenen und steuerbaren Schwenkwinkel verschwenkt und treten in Abhängigkeit von ihrer in Umfangsrichtung variierenden radialen Erstreckung in Bezug auf die Achse der Schwenkwelle 72 mit dem jeweils zugeordneten Bremsband 66' in Wechselwirkung, um das Bremsband 66' zu spannen oder zu entspannen.

Ein jeweiliges Mitnehmerelement 64 - hier in Form oder mit einer Bremsscheibe 65 oder Bremstrommel - und eine jeweiliges Bremselement 66 - hier jeweils in Form eines individuell zugeordneten Bremsbandes 66' - sind von der Drehachse Y der Kurbelwelle 15 radial beabstandet.

Jedes der Sonnenräder 55 des ersten Planetengetriebes 51 und jedes der Sonnenräder 56 des zweiten Planetengetriebes 52 der Getriebeschaltstufen 50 weist eine eigene und mit dem jeweiligen Sonnenrad 55, 56 drehfest gekoppelte oder koppelbare Bremsscheibe 65 oder Bremstrommel als Mitnehmerelement 64 mit für den Reibschluss ausgebildeter Außenumfangsfläche 65a auf. Die Mitnehmerelemente 64 sind in Bezug auf die als Bremsbänder 66' ausgebildeten Bremselemente 66, so abgestimmt angeordnet, dass durch gesteuertes Betätigen der Bremselemente 66 und damit durch gesteuerten Reibschluss ein getrenntes oder kombiniertes Freigeben oder Sperren der einzelnen Sonnenräder 55 und 56 der ersten und zweiten Planetengetriebe 51, 52 der Getriebeschaltstufen des Schaltgetriebes 50 erreicht werden kann.

Ferner ist an verschiedenen Stellen des Schaltgetriebes 50 jeweils ein Freilauf 59 bzw. 59-1 ausgebildet, wobei der Freilauf 59-1 im Zusammenhang mit einem Direktgang steht.

Die Hochtreiberstufe 40 mit dem Planetengetriebe 41 zum Einbringen des mit Muskelkraft erzeugten Drehmomentes weist ein Hohlrad 42, ein innenlaufendes Sonnenrad 43 sowie einen dazwischen laufenden Planetensteg 45 mit Planeten 44 der Hochtreiberstufe 40 auf.

Andererseits wird das vom elektrischen Antrieb 3 erzeugte Motordrehmoment durch die Motorwelle 31 an das Motorreduziergetriebe 30 abgegeben und letztlich an ein Stirnrad 35 als Abtriebselement des Motorreduziergetriebes 30 übertragen, welches materiell verbunden ist mit dem eingangsseitigen Planetensteg 22 des Schaltgetriebes 50.

In dem in Figur 2 dargestellten Fall besteht das Motorreduziergetriebe 30 aus einer Anordnung mehrerer Stirnräder 32 bis 34, die das Motordrehmoment abtriebsseitig auf das mit dem eingangsseitigen Planetensteg 22 gekoppelte Stirnrad 35 übertragen.

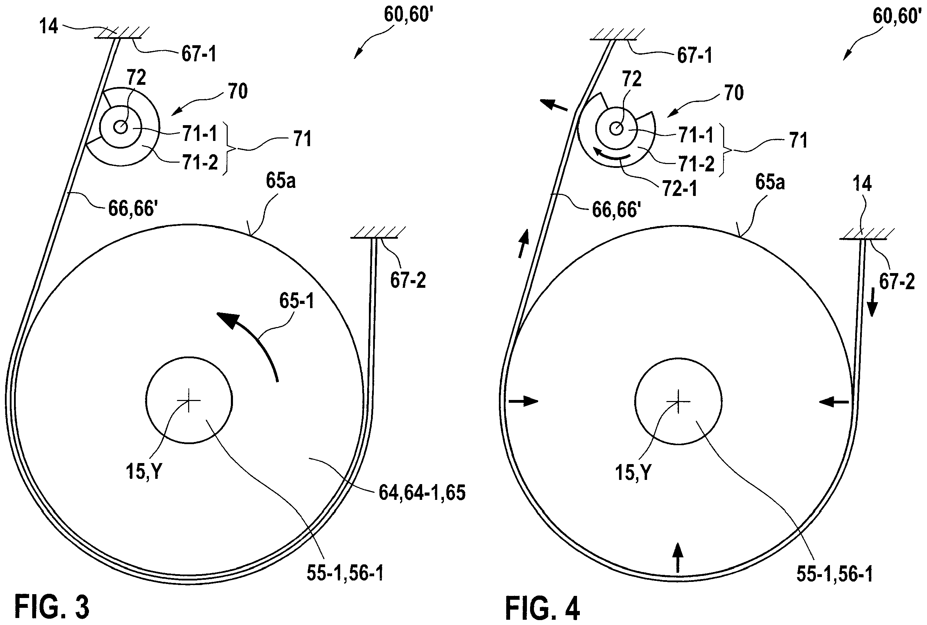

Die Figuren 3 und 4 zeigen in schematischer und teilweise geschnittener Seitenansicht eine Bremseinheit 60, die bei einer Ausführungsform der erfindungsgemäßen Antriebsanordnung 80 eingesetzt werden kann, und zwar in einem außer Eingriff stehenden Zustand in Figur 3 und in einem außer Eingriff zustehenden Zustand zwischen Bremsband 66' und Mitnehmerelement 64 gemäß Figur 4.

Das Mitnehmerelement 64 ist als Reibelement 64-1 ausgebildet und weist insbesondere die Gestalt einer Bremsscheibe 65 oder Bremstrommel auf, welche mit einer Außenumfangsfläche 65a für einen Reibschluss ausgebildet ist. Der Reibschluss ist steuerbar bewirkbar im Zusammenhang mit einem als Bremsband 66' ausgebildeten Bremselement 66 einer als Bandbremse 60' ausgestalteten Bremseinheit 60. Ein Teil des Bremsbandes 66', welches zwischen zwei Montagepunkten 67-1 und 67-2 angebracht ist, umläuft einen Teil der Umfangsfläche 65 a des Mitnehmerelements 64, also der Bremsscheibe 65. Für eine steuerbare Ausbildung des Reibschlusses ist eine Stelleinrichtung 70 ausgebildet, welche ein auf einer Schwenkachse 72 montiertes Stellelement 71, insbesondere in Form eines Spannelements, aufweist. Das Stellelement 71 wird innen liegend von einem ersten Teil oder Achsenteil 71-1 und außen liegend von einem zweiten Teil oder Radialteil 71-2 gebildet. Der Radialteil 71-2 definiert eine in Umfangsrichtung winkelabhängige radiale Erstreckung. In der in Figur 3 und 4 dargestellten Ausführungsform ist im Querschnitt der Achsenteil 71-1 kreisscheibenförmige, wogegen der Radialteil 71-2 die Form eines Kreisringsegments besitzt.

In der in Figur 3 gezeigten Winkelstellung ist das Bremsband 66' entspannt und es liegt kein Reibschluss zwischen Bremsband 66' und dem Reibelement 64-1 und seiner für den Reibschluss ausgebildeten Außenumfangsfläche 65a vor. Durch Drehen oder Schwenken des Stellelements 71 um die Achse 72 in Richtung des Pfeils 72-1 berührt der Radialteil 71-2 nun das Bremsband 66', um dieses zu spannen oder zu straffen, wodurch eine mechanische Kopplung und eine Reibschluss des Bremsbands 66' mit der Außenumfangsfläche 65a der Bremsscheibe 65 oder Bremstrommel bewirkt wird. Dadurch wird im Übergang von der Situation gemäß Figur 3 zu der Situation gemäß Figur 4 die Drehung 65-1 der Bremsscheibe 65 und damit der zu Grunde liegenden Sonnenradwelle 55-1, 56-1 des jeweiligen Sonnenrads 55, 56 unterbunden oder zumindest gehemmt.

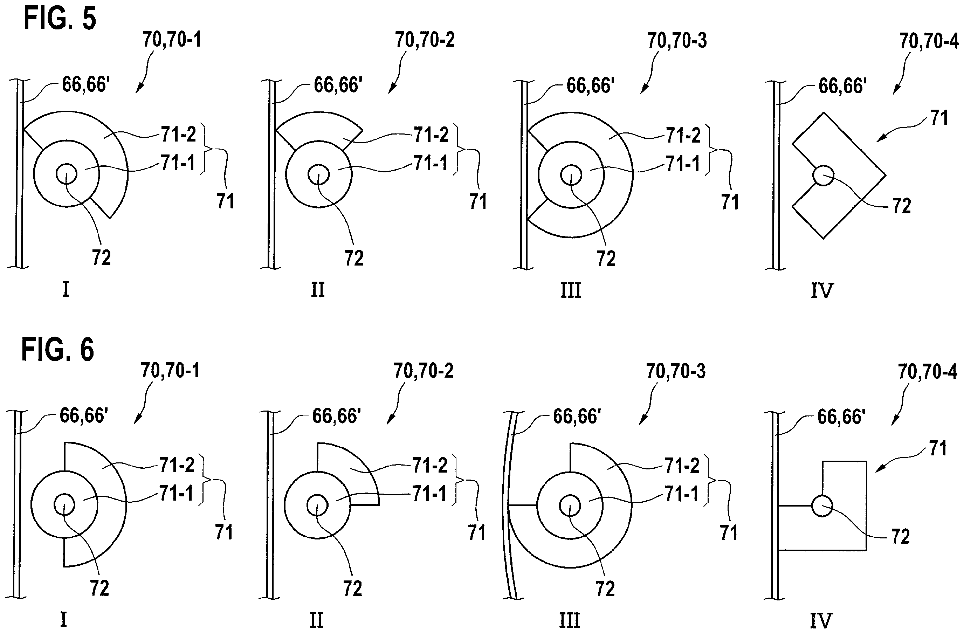

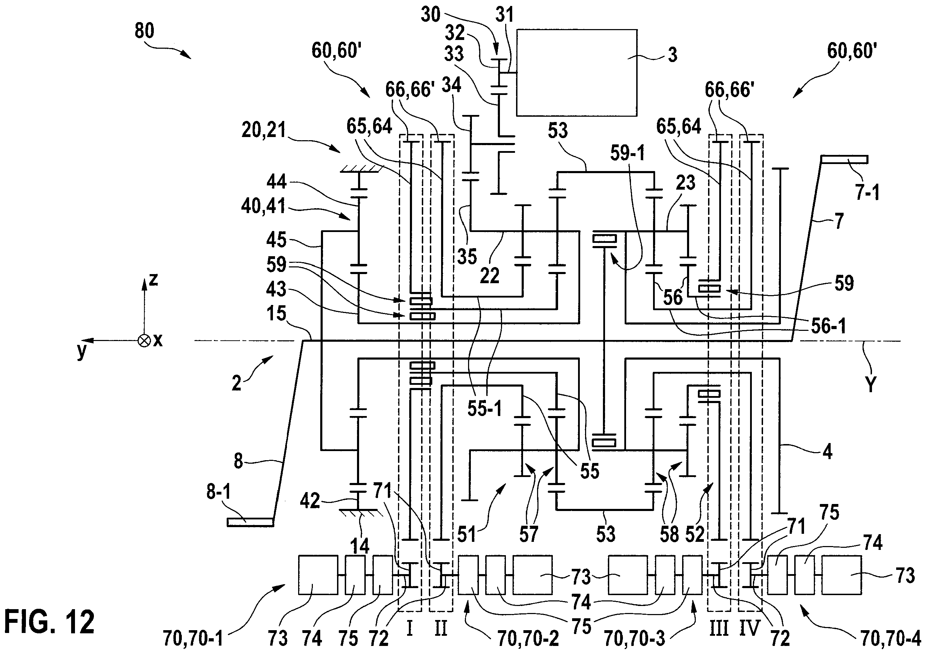

Die Figuren 5 bis 11 zeigen in schematischen und teilweisen geschnittenen Seitenansichten eine Ausführungsform der erfindungsgemäß verwendeten Bremseinheit 60, bei welcher vier zusätzlich mit I bis IV bezeichnete Kombinationen aus Bremsband 66' und Stellelement 71 als Stelleinrichtungen 70-1 bis 70-4 ausgebildet sind und in verschiedenen Betätigungszuständen vorliegen. Die Bezeichnungen I bis IV entsprechen den Bezeichnungen I bis IV, die in der Figur 2 und in der späteren Figur 12 eingefügt ist.

Sämtliche Stellelemente 71 der Stelleinrichtungen 70-1 bis 70-4 sind, ähnlich der Darstellung aus Figur 2, drehfest auf einer gemeinsamen Schwenkwelle 72 und in Abhängigkeit von ihrer jeweiligen Umfangswinkel abhängigen radialen Erstreckung in fester Winkelrelation zueinander montiert, um in Abhängigkeit von der Winkelstellung der Schwenkwelle 72 eine Kombination von jeweils betätigtem oder freigegebenem Bremsband 66' und damit eine Kombination von feststehendem oder freigegebenem Sonnenrad 55, 56 und mithin eine entsprechende Gangkombination zu bewirken.

Die Figuren 5 bis 11 entsprechen dabei Gängen 1 bis 7 des in Figur 2 gezeigten Planetenschaltgetriebes 50. Die nachfolgende Tabelle gibt die Zustände I bis IV der einzelnen Bremsbänder 66' für die in den Figuren 5 bis 11 gezeigten Situationen wieder:

**Tabelle 1: Zustände der Bremsbänder aus den Figuren 2, 5 bis 11 und 12**

| Gang | I | II | III | IV |
|---|---|---|---|---|
| 1 | frei | frei | frei | frei |
| 2 | frei | frei | gesperrt | frei |
| 3 | frei | frei | gesperrt | gesperrt |
| 4 | gesperrt | frei | gesperrt | frei |
| 5 | gesperrt | frei | gesperrt | gesperrt |
| 6 | gesperrt | gesperrt | gesperrt | frei |
| 7 | gesperrt | gesperrt | gesperrt | gesperrt |

Die einzelnen Stellelemente 71 werden für die Situation gemäß I bis III in Bezug auf die Radialteile 71-2 von einem halbkreisringförmigen, viertelkreisringförmigen bzw. dreiviertelkreisringförmigen Teil gebildet, wogegen das Stellelement 71 in der Situation gemäß IV von einem Eckelement oder einer L-Form gebildet wird.

Figur 12 ist eine schematische Draufsicht auf eine andere Ausführungsform der erfindungsgemäßen Antriebsanordnung 80 mit Kurbeltrieb 2 und mit elektrischem Antrieb 3, bei welcher vorgesehene Bremsbänder 66' über Stellelemente 71 auf individuellen Schwenkachsen 72 individueller Stelleinrichtungen 70-1 bis 70-4 steuerbar betätigbar sind.

Die individuellen Stelleinrichtungen 70-1 bis 70-4 weisen jeweils eine eigene Schwenkachse 72 auf, an welcher ein jeweiliges Stellelement 71 drehfest montiert ist. Die Schwenkachse 72 wird jeweils mittels eines individuellen Motors 73 unter Zwischenschaltung eines Getriebes 74 und/oder eines Gesperres 75 steuerbar schwenkbar, um ein individuelles Sperren oder Freigeben eines zugeordneten Bremsbandes 66' und damit der zugeordneten Welle 55-1, 56-1 der Sonnenräder 55, 56 zu bewirken.

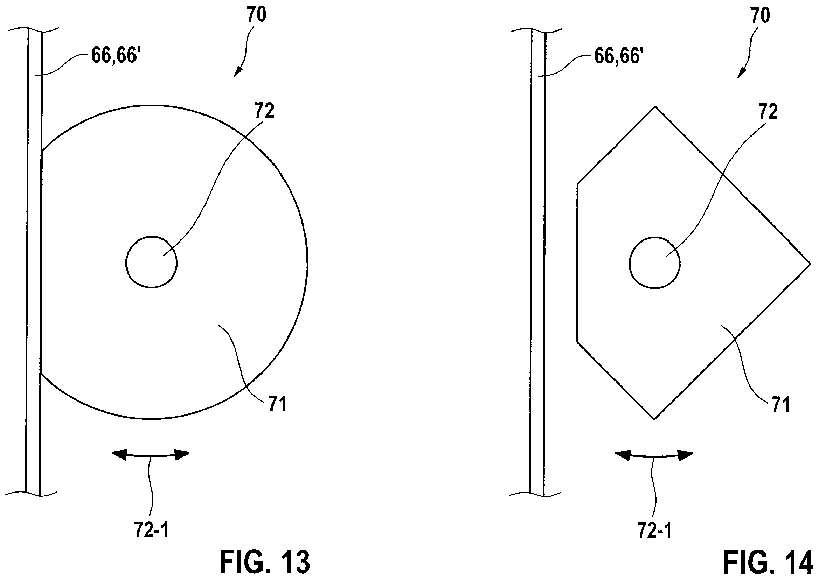

Die Figuren 13 und 14 zeigen in schematischer und teilweise geschnittener Seitenansicht andere Ausführungsformen von Stellelementen 71 zur unmittelbaren und direkten Betätigung eines zugeordneten Bremsbandes 66'. Diese Stellelemente 71 besitzen im Querschnitt in einer Ebene senkrecht zur Achse der Schwenkwelle 72 die Form eines angeschnittenen Kreises bzw. eines angeschnittenen Quadrats.

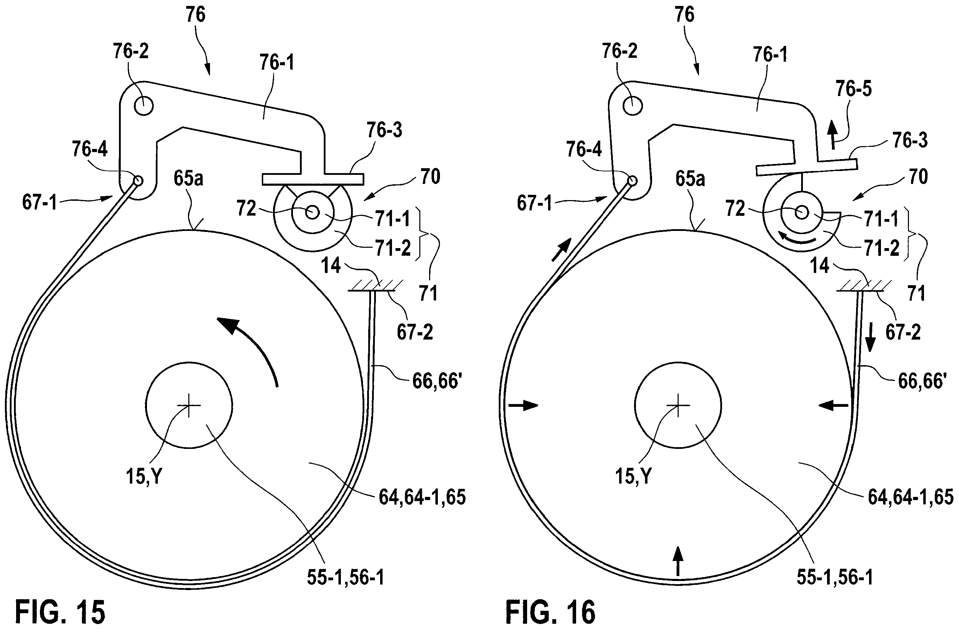

Die Figuren 15 und 16 zeigen in schematischer und teilweise geschnittener Seitenansicht eine Kombination aus Bremseinheit 60 und Mitnehmerelement 64, bei welcher ein vorhandenes Stellelement 70 zur indirekten und nur mittelbaren Ansteuerung eines Bremsbandes 66' ausgebildet ist, nämlich vermittelt über einen Hebelmechanismus 76.

Ein jeweiliger Hebelmechanismus 76 wird gebildet von einem Hebelkörper 76-1 welcher in einem Mittelbereich um eine Schwenkachse 76-2 schwenkbar ausgebildet ist. Ein Bremsband 66' wird an einem Montagepunkt 77 an einem Gehäuse montiert und andererseits an einem Befestigungsende 76-4 des Hebelkörpers 76-1 angebracht. An einem gegenüberliegenden Betätigungsende 76-3 des Hebelkörpers 76-1 greift gesteuert das um die Schwenkwelle 72 schwenkbare Stellelement 71 mit seinem Radialteil 71-1 an, um gesteuert den Hebelkörpers 76-1 gemäß der Richtung des Pfeils 76-5 um die Schwenkachse der Schwenkwelle 76-2 zu verschwenken und dadurch das Bremsband 66' in Bezug auf die Außenumfangsfläche 65a des als Reibelement 64-1 fungierenden Mitnehmerelements 64 in Form einer Bremsscheibe 65 in Reibschluss zu bringen oder von einem Reibschluss zu lösen, um dadurch entweder ein Sperren oder ein Freigeben der Welle 55-1, 56-1 des Sonnenrads 55, 56 zu bewirken.

Wichtig ist, dass der Schwenkpunkt und mithin also die Schwenkachse 76-2 sich zwischen dem Montageende 76-4 und dem Betätigungsende 76-3 des Hebelkörpers 76-1 am Hebelkörper, 1 befindet.

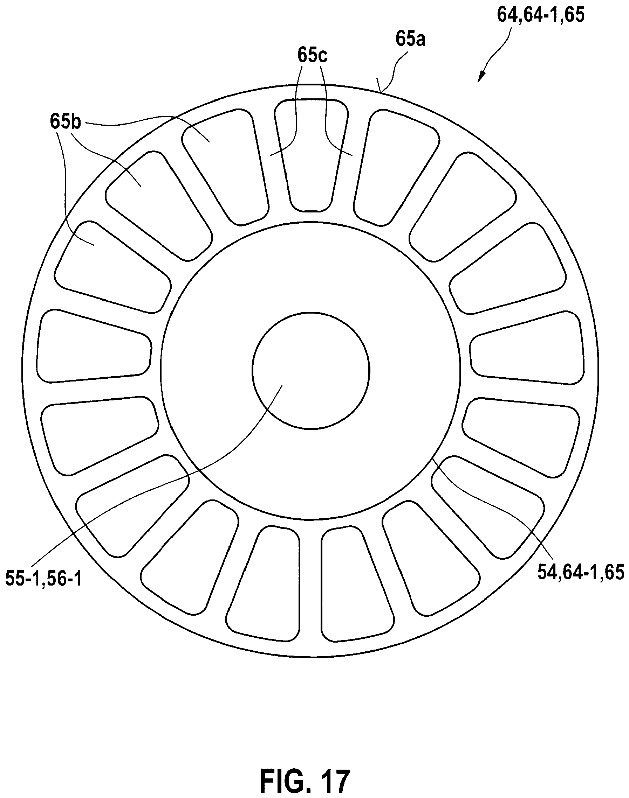

Figur 17 zeigt in schematischer und geschnittener Seitenansicht ein erfindungsgemäß verwendbares Mitnehmerelement 64 mit einer Speichenkonfiguration der zu Grunde liegenden Bremsscheibe 65 oder Bremstrommel zur Gewichtseinsparung. Eine derartige Speichenkonfiguration mit Ausnehmungen 65b und Stegen 65c in der Querschnittsansicht in einer Ebene senkrecht zur Welle 55-1, 56-1 des Sonnenrads 55, 56 ist möglich, weil der Reibschluss in Bezug auf die Außenumfangsfläche 65a der Bremsscheibe 65 oder Bremstrommel bewirkt wird.

Diese und weitere Merkmale und Eigenschaften der vorliegenden Erfindung werden an Hand der folgenden Darlegungen weiter erläutert: Die Erfindung betrifft insbesondere Elektrofahrräder, Pedelecs, eBikes und dergleichen, insbesondere mit Mittelmotorantrieb und einer Fahrradschaltung zur Anpassung der begrenzten Antriebskraft des Fahrers an die unterschiedlichen Fahrwiderstände.

Eine Zielsetzung der Erfindung ist die Schaffung einer Fahrradschaltung z.B. nach dem Grundprinzip einer Nabenschaltung und diese in eine Antriebsanordnung 80 am Tretlager 13 z.B. eines Pedelecs oder dergleichen zu integrieren.

Eine übliche Schaltvorrichtung am Hinterrad 9-2 kann dann erfindungsgemäß entfallen.

Dabei soll eine besonders kompakte Konfiguration einer Antriebsanordnung 80 mit hohem Wirkungsgrad erzielt werden, die lastschaltfähig ist, ein Schalten ohne Zugkraftunterbrechung erlaubt und dabei ohne oder mit einem verringerten Maß an Leerwegen auskommt und einen besonders ruckarmen oder gar ruckfreien Schaltübergang schafft.

Bekannt sind Tretlagerantriebe mit integriertem Schaltgetriebe, welche einen Hohlwellenmotor koaxial zur Tretkurbelwelle und ein zur Tretkurbelwelle achsparalleles Schaltgetriebe aufweisen.

Ferner ist die Integration eines Reibringgetriebes als stufenlos verstellbares Fahrradschaltgetriebe in einen Pedelec/eBike-Tretlagerantrieb bekannt. Ein Reibringgetriebe hat als reibschlüssiges Getriebe den Nachteil eines im Vergleich geringeren Wirkungsgrads, welcher sich auf die Batteriereichweite und die Fahrbarkeit ohne Motorunterstützung, insbesondere beim Fahren mit über 25 km/h bei Pedelecs, auswirkt.

Ein weiteres Konzept sind Tretlagerantriebe mit integrierten Schaltungen auf der Basis von Stirnradgetrieben. Diese haben den Nachteil einer vergleichsweise geringeren Drehmomentdichte. Auch sind sie insbesondere beim Herunterschalten in einen niedrigeren Gang nicht unter Last bzw. nur unter Teillast schaltbar. Des Weiteren weisen diese Schaltungen keine elektromechanisch aktuierte automatische Gangwahl auf.

Andere Konzepte haben den Nachteil, dass das Schalten nicht zugkraftunterbrechungsfrei erfolgt. Der Fahrer erfährt beim Schalten, insbesondere wenn er beschleunigt in die Pedale tritt, einen deutlich spürbaren Leerweg der Tretkurbeln und das Auftreten eines Rucks beim Schaltübergang.

Bei anderen bekannten Mechanismen erfolgt das Schalten durch Festhalten oder Freigeben von Zahnrädern mittels Klinken, welche um die zentrale Welle der Zahnräder angeordnet sind und radial von innen in den Radkörper formschlüssig eingreifen. Auch hier ist ein ruckfreier Schaltübergang nicht gegeben.

Die Erfindung hat z.B. auch die Aufgabe, eine lastschaltfähige, zugkraftunterbrechungsfreie und effiziente Automatikfahrradschaltung zu schaffen und in eine Antriebseinheit 80 am Tretlager 13 eines Pedelecs zu integrieren, welche darüber hinaus ruckarm oder ruckfrei schaltet und kompakt ausgestaltet ist.

Eine Schaltvorrichtung am Hinterrad 9-2 kann entfallen. Dabei soll eine besonders kompakte Darstellung des Pedelec-Antriebs 80 erzielt werden.

Die Erfindung löst die gestellte Aufgabe unter anderem mit dem Einsatz und der Integration eines schaltbaren Planetengetriebes 21 in koaxialer Anordnung zur Tretkurbelwelle 15 und zum Kettenblatt 4 als Abtriebselement. Das schaltbare Planetengetriebe 21 übernimmt die Aufgabe der Fahrradschaltung bzw. der variablen Übersetzung für die Antriebskraft des Fahrers.

Das Variieren der Übersetzung bzw. Schalten erfolgt durch Blockieren oder Freigeben von Sonnenrädern 55, 56 eines Schaltgetriebes 50 des Planetengetriebes 21. Durch den Einsatz eines formschlüssigen Getriebes ist der Wirkungsgrad gegenüber einem integrierten reibschlüssigen Getriebe verbessert.

An den Sonnenrädern 55, 56 des Schaltgetriebes 50 sind jeweils Mitnehmerelemente 64 - z.B. als Bremsscheibe 65 oder als Bremstrommel - einer Bremseinheit 60 in Form einer Bandbremse 60' angebracht, die mit den Sonnenrädern 55, 56 drehfest verbunden oder verbindbar sind und mit diesen umlaufen.

Mittels eines jeweils zugeordneten Bremsbandes 66'als Bremselement 66 der Bremseinheit 60 können die Mitnehmerelemente 64 und damit die Sonnenräder 55, 56 einzeln oder kombiniert in beiden Drehrichtungen durch Reibschluss gesteuert abgebremst, arretiert und blockiert oder alternativ freigegeben werden. Die Steuerbarkeit des Reibschlusses gewährleistet ruckarme oder ruckfreie Schaltübergänge.

Mit den Mitnehmerelementen 64 und den Bremsbändern 66' als Bremselementen 66 und deren achsferner Anordnung zur Tretkurbelwelle 15 kann bei entsprechendem Achsabstand ein formschlüssiges Blockieren, Halten und Freigeben der Sonnenräder 55, 56 in größerem Abstand zur zentralen Achse Y der Sonnenräder 55, 56 und somit mit geringerem Kraftaufwand erfolgen.

Ein Variieren der Übersetzung bzw. ein Schalten unter Maximallast auch beim besonders kritischen Herunterschalten der Gänge wird hiermit verschleißfrei, unter Beibehaltung einer kompakten Darstellung der Zahnräder und ohne Ruck möglich.

Ein oder mehrere Mitnehmerelemente 64 können über einen mechanisch selbstschaltenden Freilauf mit dem Sonnenrad 55, 56 verbunden sein. Dadurch ist es möglich, einen Leerweg der Tretkurbeln 7, 8 ohne Leistungsübertragung bei allen Schaltvorgängen zu vermeiden.

Bei den Mitnehmerelementen 64 kann mittels der Bremsbänder 66' als Bremselemente 66 und deren Steuerbarkeit in Kombination mit dem Freilauf 59, 59-1 bei einem Drehrichtungswechsel der zugehörigen Sonnenräder 55, 56 ein Wegdrehen der Mitnehmerelemente 64 verhindert werden, so dass bei Blockade der Sonnenräder 55, 56 kein Leerweg der Tretkurbeln 7, 8 ohne Leistungsübertragung auftritt.

Erfindungsgemäß wird damit bei allen Schaltvorgängen Leistung vom Fahrer auf das Kettenblatt 4 bzw. Hinterrad 9-2 und damit zugkraftunterbrechungsfrei übertragen.

Figur 2 zeigt in einer bevorzugten Ausführung den Aufbau eines Pedelec/eBike-Tretlagerantriebs 80 mit einem integrierten lastschaltfähigen 7-Gang-Planetenschaltgetriebe 50 in koaxialer Anordnung zur Kurbelwelle 15 und Kettenblatt 4 und reibschlüssiger Schaltmechanik bestehend aus vier Bandbremsen 60' als Bremseinheiten 60 und einem Stellmotor 73 mit Getriebe 74 und mechanischer Sperrfunktion 75.

Das schaltbare Planetengetriebe 50 setzt sich aus zwei Stufenplanetengetrieben 51, 52 mit jeweils einem Stufenplaneten 57, 58, welcher aus zwei drehfest miteinander verbundenen Planeten mit unterschiedlichen Durchmessern besteht, zusammen.

Auf einer gemeinsamen Achse oder Welle 72, welche parallel zur Kurbelwelle 15 verläuft und mit einem Stellmotor 73 verbunden ist, sind drehfest vier Exzenter als Stellelemente 71 für die jeweilige Bandbremse 66' angebracht.

Durch seitlich an den Sonnenrädern 55, 56 des Planetenschaltgetriebes angebrachte Bremsscheiben 65 als Mitnehmerelemente 64 können die Sonnenräder 55, 56 einzeln oder in Kombination mittels der Bandbremsen 66' in ihrer Drehbewegung blockiert bzw. drehfest mit dem Gehäuse 14 verbunden und wieder freigegeben werden. Durch das Blockieren und Freigeben der vier 55, 56 Sonnenräder können insgesamt vier Übersetzungen realisiert werden. Weitere Übersetzungen ergeben sich durch den Einsatz von Freiläufen 59, 59-1, durch die zum einen innerhalb des linksseitigen Stufenplanetengetriebes 51 mit Übersetzung ins Schnelle der Planetensteg 22 mit einer Sonnenradwelle 55-1 und zum anderen die Tretkurbelwelle 15 mit dem Planetensteg 23 des rechtsseitigen und ins Langsame übersetzenden Stufenplanetengetriebes 52 und damit direkt mit dem Kettenblatt 4 als Direktgang verbunden werden.

In beiden Fällen kann zusätzlich die Übersetzung 1:1 sowohl in dem linksseitigen Stufenplanetengetriebe 52 als auch in der Gesamtübersetzung als Direktgang realisiert werden. Dabei bedeutet ein Direktgang einen entsprechend besonders hohen Wirkungsgrad. Die beiden mittels Freilauf 59, 59-1 realisierten Übersetzungen müssen nicht aktiv geschaltet werden, sondern können durch die beiden Überholfreiläufe jeweils mechanisch selbstschaltend erfolgen.

Es lassen sich insbesondere sieben Gänge realisieren. Die Übersetzungen reichen von Übersetzung 1 im ersten Gang, dem Direktgang, bis zu einer Übersetzung von 0,25 im siebten Gang. Es ergeben sich eine Gesamtspreizung von 400 % und Gangsprünge im Mittel von ca. 26%. Damit wird eine erforderliche Entfaltung von 2 m bis 8 m für Standardräder abgedeckt.

Die Darstellung aus Figur 2 zeigt zudem, dass zwei der vier Bremsscheiben 65 jeweils über einen selbstschaltenden Überholfreilauf 59, 59-1 mit dem zugehörigen Sonnenrad 55, 56 verbunden sind. Die Bremsscheibe 65 kann so mittels des Bremsbandes 66' in der Blockadeposition gehalten und gleichzeitig das Sonnenrad 55, 56 für einen Gangwechsel wieder freigegeben werden. Dies geschieht, indem bei einem Gangwechsel das Sonnenrad 55 56 eine Drehrichtungsumkehr erfährt und dabei gleichzeitig der Freilauf 59, 59-1 die Bremsscheibe 65 von dem zugehörigen Sonnenrad entkoppelt. Durch das unmittelbare Umschalten der Freiläufe 59, 59-1 wird verhindert, dass beide Sonnenräder eines Stufenplanetengetriebes gleichzeitig unter Last blockiert werden können. Damit ist ein Gangwechsel bzw. Schalten zugkraftunterbrechungsfrei und unter Last möglich. Es ist immer ein Gang eingelegt. Es findet immer eine Leistungsübertragung vom Fahrer auf das Kettenblatt 4 bzw. Hinterrad 9-2 statt, auch bei einem Gangwechsel.

Wie in den Figuren 3 und 4 am Beispiel der mit III bezeichneten Bandbremse 60' aus den Figuren 2 und 5 bis 12 dargestellt ist, umschlingt das Band 66' der Bandbremse 60' die mit dem Sonnenrad 56 verbundene Bremsscheibe 65.

Dabei ist zunächst, beispielsweise im ersten Gang, das Band 66' zugkraftfrei und die Bremsscheibe 65 und damit das mit dieser Scheibe drehfest verbundene Sonnenrad 56 können rotieren. Die Bandbremse 60' ist gelöst.

Wird das entsprechende Stellelement 71 in eine Position gedreht, welche das zugeordnete Band 66' strafft, wird auf das Band 66', welches an beiden Enden über Montagepunkte 67-1, 67-2 fest mit dem Gehäuse 14 verbunden ist, eine Zugkraft aufgebracht. Das Band 66' legt sich an die Bremsscheibe 65 und deren Außenumfangsfläche 65a für einen Reibschluss an und bremst diese bis auf Drehzahl Null ab.

Bleibt das Stellelement 71 in einer Position, bei der das Band 66' weiterhin gestrafft ist, wird die Bremsscheibe 65 und damit das mit dieser Scheibe 65 drehfest verbundene Sonnenrad 55, 56 in seiner Drehbewegung blockiert. Die Bandbremse 60' ist angezogen.

Das Lösen der Bandbremse 60' kann durch eine kontinuierliche Aufgabe der Blockade erfolgen, damit kann eine quasi stufenlose Übersetzungsänderung erzielt werden. Entsprechendes gilt für das Anziehen der Bandbremse 60'.

Es entstehen zudem keine Schaltschläge wie sie durch eine formschlüssige Schaltmechanik zu erwarten sind.

Es ergibt sich bei einer reibschlüssigen Schaltmechanik mit Bandbremse 60' ein quasi stufenloser, steuerbarer und sanfter Schaltübergang.

In Figur 2 ist weiter dargestellt, dass auf einer gemeinsamen Achse oder Welle 72 vier Exzenter als Stellelemente 71 für die jeweilige Bandbremse 60' drehfest angebracht sind. Dadurch ist ein einzelner Stellmotor 73 ausreichend, um durch Drehen dieser Achse oder Welle 72 alle Stellelemente gleichzeitig in die für eine bestimmte Übersetzung richtige Position zu drehen bzw. um die Sonnenräder 55, 56 nach einer festgelegten Logik mittels der Bandbremsen 60' zu blockieren und wieder freizugeben.

Es können somit mit nur einem Stellmotor 73 nacheinander alle Gänge geschaltet bzw. alle Übersetzungen des Planetenschaltgetriebes 50 gewählt werden.

Für das Halten einer Position der Stellelemente 71 bzw. der gemeinsamen Achse ist in der Anordnung nach Figur 2 ein Gesperre 75 als Hemmfunktion dargestellt.

Die Hemmfunktion des Gesperres 75 bewirkt, dass der Leistungsfluss vom Stellmotor 73 ausgehend in Richtung der Stellelemente 71 passieren kann, während ein Leistungsfluss in entgegengesetzter Richtung von den Stellelementen 71 ausgehend in Richtung des Stellmotors 73 bzw. eine Drehung der Achse oder Welle 72 von den Stellelementen 71 ausgehend gesperrt bzw. blockiert wird. Dies gilt jeweils für beide Drehrichtungen der Achse oder Welle 72.

Eine dauerhafte Bestromung des Stellmotors 73 ist damit nicht erforderlich, um eine Position der Achse oder Welle 72 zu halten.

Alternativ kann die Hemmfunktion eines Gesperres 75 durch die Selbsthemmfunktion eines Getriebes 74 ausgeführt werden, beispielsweise eines Schneckengetriebes als Untersetzungsgetriebe für den Stellmotor 73.

Für den Stellmotor 73 ist ein Untersetzungsgetriebe vorgesehen. Damit können ein Stellmotor 73 und insgesamt der Tretlagerantrieb 80 kompakter ausgelegt werden. Das Untersetzungsgetriebe kann in beispielhafter Ausführung ein achsparalleles oder koaxiales Stirnradgetriebe, ggf. mehrstufig, oder koaxial ein Planetengetriebe, ggf. mehrstufig, oder ein Schneckengetriebe mit 90°-Umlenkung oder eine Kombination aus den genannten Getriebeformen sein.

Die Figuren 5 bis 11 zeigen in einer bevorzugten Ausführung die Schaltlogik durch die jeweilige Position der Stellelemente 71 und des Bands 66' der Bandbremse 60 für alle vier mit I bis IV bezeichneten Bandbremsen 60' bei allen sieben Gängen.

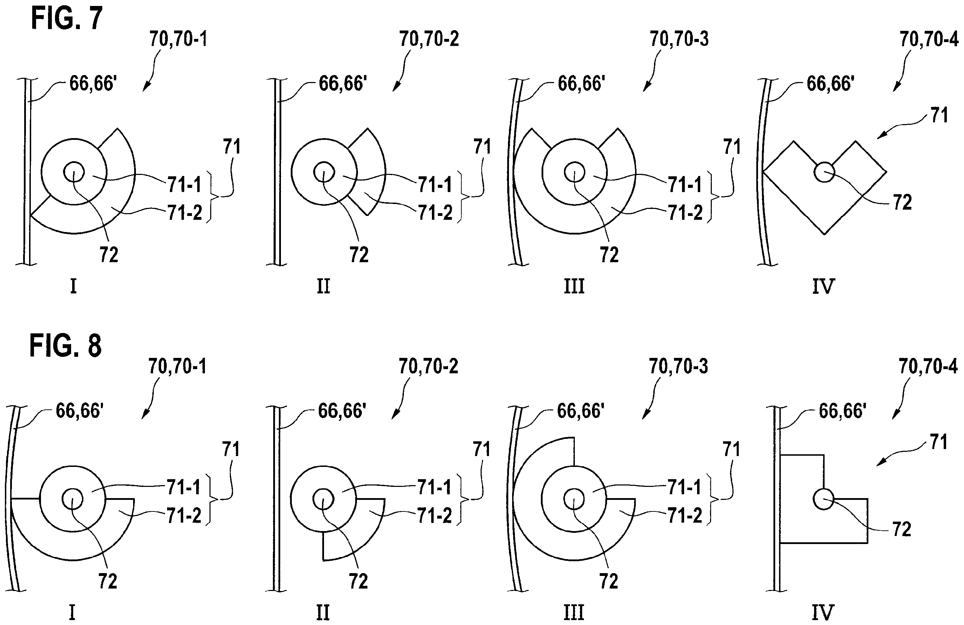

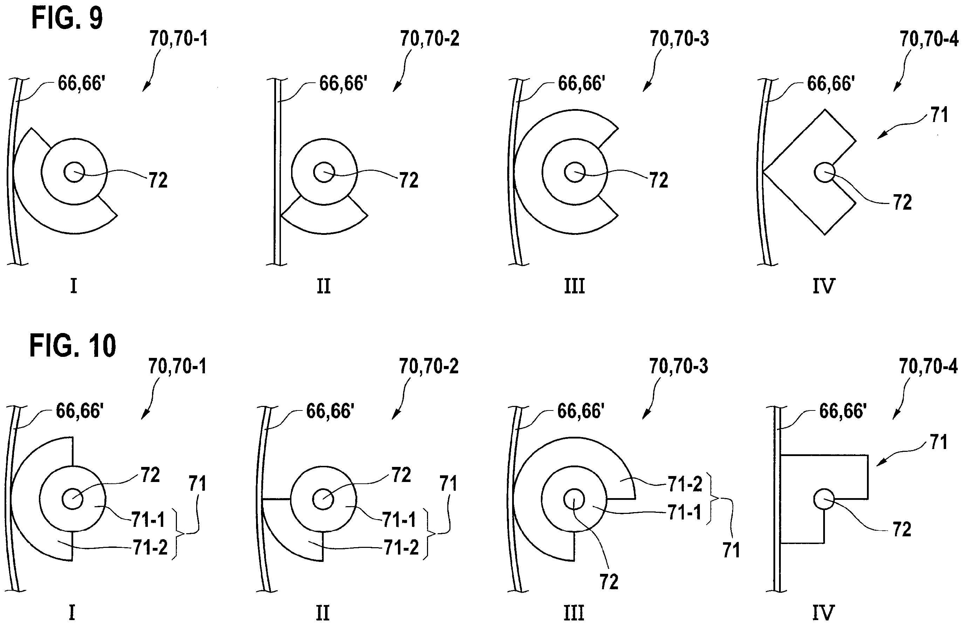

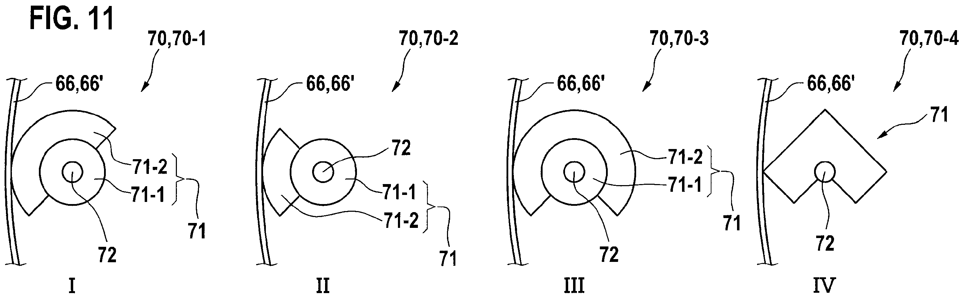

Mit der Position der Stellelemente 71 ist jeweils die Blockade oder ein Freigeben der einzelnen Bremsscheiben 65 für das Einstellen der Gänge 1 bis 7 verbunden, wie dies auch oben in der Tabelle zusammenfassend dargestellt ist. Dabei erfolgt bis auf den Wechsel in den 1. Gang und umgekehrt vom 1. Gang in den 2. Gang bei jedem Schaltvorgang ein Wechsel in der Blockade zwischen den beiden Sonnenrädern 56 der Bremsscheiben 65 zu III und IV:
1. Gang gemäß Figur 5: Alle Bänder 66' sind zugkraftfrei. Alle vier Bremsscheiben 65 bzw. die zugehörigen Sonnenräder 55, 56 sind freigegeben und können rotieren.
2. Gang gemäß Figur 6: Drehen der Achse oder Welle 72 mit den Stellelementen 71 um 45 Grad, so dass Stellelement 71 zu III das Band 66' der Bandbremse 60' zu III strafft. Blockade der Bremsscheibe 65 zu III bzw. des zugehörigen Sonnenrads 56.
3. Gang gemäß Figur 7: Weiteres Drehen der Achse oder Welle 72 mit den Stellelementen 71 um 45 Grad, so dass zusätzlich Stellelement 71 zu IV das zugeordnete Band 66' der Bandbremse 60' zu IV strafft. Blockade der Bremsscheibe 65 zu IV bzw. des zugehörigen Sonnenrads 56. Bremsscheibe 65 zu III bleibt blockiert. Das Sonnenrad 56 der Bremsscheibe 65 zu III erfährt eine Drehrichtungsumkehr und wird über einen Freilauf 59, 59-1 zwischen der Bremsscheibe 65 und dem zugehörigen Sonnenrad 56 freigegeben.
4. Gang gemäß Figur 8: Weiteres Drehen der Achse oder Welle mit den Stellelementen 71 um 45 Grad, so dass zusätzlich das Stellelement 71 zu I das zugeordnete Band 66' der Bandbremse 60' zu I strafft. Blockade der Bremsscheibe 65 zu I bzw. des zugehörigen Sonnenrads 55. Gleichzeitig wird Bremsscheibe 65 zu IV bzw. das zugehörige Sonnenrad 56 freigegeben und kann rotieren. Die Bremsscheibe 65 zu III bleibt blockiert. Das Sonnenrad 56 zur Bremsscheibe 65 zu III erfährt eine Drehrichtungsumkehr und wird so durch die weitere Blockade der Bremsscheibe 65 zu III blockiert.
5. Gang gemäß Figur 9: Weiteres Drehen der Achse oder Welle 72 mit den Stellelementen 71 um 45 Grad, so dass das Stellelement 71 zu IV das zugehörige Band 66' der Bandbremse 60' zu IV strafft. Blockade der Bremsscheibe 65 zu IV bzw. des zugehörigen Sonnenrads 56. Die Bremsscheibe 65 zu III bleibt blockiert. Die Freigabe des zugehörigen Sonnenrads 56 erfolgt wie beim 3. Gang über eine Drehrichtungsumkehr und den Freilauf 59, 59-1 zwischen der Bremsscheibe 65 zu III und dem zugehörigen Sonnenrad 56.
6. Gang gemäß Figur 10: Weiteres Drehen der Achse oder Welle 72 mit den Stellelementen 71 um 45 Grad, so dass zusätzlich das Stellelement 71 zu II das zugeordnete Band 66' der Bandbremse 60' zu II strafft. Blockade der Bremsscheibe 65 zu II bzw. des zugehörigen Sonnenrads 55. Die Bremsscheibe 65 zu I bleibt blockiert. Das Sonnenrad 55 zu der Bremsscheibe 65 zu I erfährt eine Drehrichtungsumkehr und wird über einen Freilauf 59, 59-1 zwischen der Bremsscheibe 65 zu I und dem zugehörigen Sonnenrad 55 freigegeben. Gleichzeitig wird Bremsscheibe 65 zu IV bzw. das zugehörige Sonnenrad 56 freigegeben und kann rotieren. Die Bremsscheibe 65 zu III bleibt blockiert. Die Blockade des zugehörigen Sonnenrads 56 erfolgt wie beim 4. Gang über eine Drehrichtungsumkehr und die weitere Blockade der Bremsscheibe 65 zu III.
7. Gang gemäß Figur 11: Weiteres Drehen der Achse oder Welle 72 mit den Stellelementen 71 um 45 Grad, so dass das Stellelement 71 zu IV das zugeordnete Band 66' der Bandbremse 60' zu IV strafft. Blockade der Bremsscheibe 65 zu IV bzw. des zugehörigen Sonnenrads 56. Alle vier Bremsscheiben 65 sind blockiert. Bremsscheibe 65 zu III bleibt blockiert. Die Freigabe des zugehörigen Sonnenrads 56 erfolgt wie beim 3. Gang über eine Drehrichtungsumkehr und den Freilauf 59, 59-1 zwischen der Bremsscheibe 60' zu III und dem zugehörigen Sonnenrad 56.

Durch einen Wechsel der Drehrichtung der Achse oder Welle 72 mit den Stellelementen 71 können die Gänge entweder hoch in einen nächsten höheren Gang oder herunter in einen nächsten niedrigeren Gang geschaltet werden.

Figur 12 zeigt in einer alternativen Ausführung einen Aufbau des Pedelec/eBike-Tretlagerantriebs 80 mit vier Stellmotoren 73 mit Getriebe 74 und mechanischer Sperrfunktion 75 zu vier unabhängigen Stelleinrichtungen 70.

In den Figuren 3 und 4 ist dazu ein Ausführungsbeispiel mit Schaltvorgang der vier Bandbremsen 60' mit Stellelement 71, Bremsscheibe 65 und Band 66' dargestellt. Bei einer Verwendung von vier Stellmotoren 73 können alle vier Stellelemente 71 in gleicher Weise ausgeführt sowie der Schaltvorgang durch ein einfaches Vor- und Zurückdrehen des Stellelementes 71 erreicht werden. Es können die einzelnen Bandbremsen 60' unabhängig voneinander betätigt und somit Gangstufen übersprungen werden.

Die Figuren 13 und 14 zeigen eine alternative Ausführung der Stellelemente für die Bandbremsen 60' zu III bzw. IV der Variante mit Einsatz von einem Stellmotor 73. Für die Variante mit Einsatz von vier Stellmotoren 73 stellt die alternative Ausführung des Stellelements für die Bandbremse 60' zu III eine Alternative dar.

In einer weiteren alternativen Ausführung kann - wie das in den Figuren 15 und 16 am Beispiel der Bandbremse 60' zu III dargestellt ist - das Aufbringen einer Zugkraft auf das Band 66' der Bandbremse 60' bzw. das Straffen des Bandes 66' über einen Hebel 76 erfolgen.

Figur 17 zeigt eine alternative Ausführung der Bremsscheibe 65 als Speichenrad. Hierdurch können Material und damit Gewicht und Kosten eingespart werden.

Für eine kompakte Auslegung des Planetenschaltgetriebes 50 wird das hohe Fahrerdrehmoment durch ein dem Planetenschaltgetriebe vorgeschaltetes Planetengetriebe als Hochtreiberstufe 40 mit Übersetzung ins Schnelle reduziert.

Dies ist in den Figuren 2 und 12 dargestellt.

Der Planetenträger 45 der Hochtreiberstufe 40 ist dabei das Antriebs- bzw. Eingangselement der Hochtreiberstufe 40 und direkt mit der Tretkurbelwelle 15 drehfest verbunden. Abtriebs- bzw. Ausgangselement der Hochtreiberstufe 40 ist das Sonnenrad 43, welches mit dem Planetensteg 22 des linksseitigen oder eingangsseitigen Stufenplanetengetriebes 51 mit Übersetzung ins Schnelle verbunden ist. Das Hohlrad 42 der Hochtreiberstufe 40 ist fest mit dem Gehäuse 14 verbunden.

Die Figuren 2 und 12 zeigen in einer bevorzugten Ausführung die Anbindung eines Motors 3 zur Unterstützung der Fahrerleistung an das Schaltgetriebe 50.

Die Anbindung des Motors 30 erfolgt über ein Reduziergetriebe 30 an den Planetensteg 22 des linksseitigen oder eingangsseitigen Stufenplanetengetriebes 51 mit Übersetzung ins Schnelle. Dabei bildet der Planetensteg 22 einen Teil des Radkörpers des Abtriebszahnrads 35 des Motorreduziergetriebes 30 und ist damit in das Motorgetriebe 30 integriert. Hierdurch ergibt sich eine besonders kompakte Bauweise des Tretlagerantriebs 80.

An dem Planetensteg 22 erfolgt für die Gänge 2 bis 7 die Summation von Fahrermoment und Motordrehmoment. Für den 1. Gang erfolgt die Summation von Fahrermoment und Motordrehmoment an der Tretkurbelwelle 15.

Das Motorreduziergetriebe 30 besteht aus einem zweistufigen Stirnradgetriebe. Auf der Zwischenwelle des Motorgetriebes 30 ist ein Freilauf angeordnet. Der Freilauf ist ein Überholfreilauf und dient der Entkopplung des Motors 3 in dem Fall, in welchem der Fahrer den Motor 3 "überholt", d.h. beispielsweise bei Ausfall des Motors 3 oder bei Geschwindigkeiten über 25 km/h. Durch die Anordnung des Motorreduziergetriebes 30 zwischen Hochtreiberstufe 40 und Planetenschaltgetriebe 50 nutzt das Motorreduziergetriebe 30 die Übersetzung der Hochtreiberstufe 40 mit und kann somit durch die um die Übersetzung der Hochtreiberstufe 40 reduzierte Untersetzung des Motorreduziergetriebes 30 kompakter ausgelegt werden.

In einer bevorzugten Weiterbildung der Erfindung kann eine Bandbremse 60' in ähnlicher Weise auch für ein schaltbares Planetengetriebe mit reibschlüssiger Schaltmechanik und sechs Gängen oder für ein schaltbares Planetengetriebe mit reibschlüssiger Schaltmechanik und zwei bis sechs Gängen ausgeführt werden.

## Patentansprüche

1. Antriebsanordnung (80) für ein mit Muskelkraft und/oder - zusätzlich mit Motorkraft antreibbares Fahrzeug (1), wie ein Elektrofahrrad, eBike oder Pedelec,
mit:
- einer um eine Drehachse (Y) drehbaren Kurbelwelle (15) zum Aufnehmen eines ersten und insbesondere mit Muskelkraft erzeugten Drehmomentes und
- einer Übertragungseinrichtung (20), welche zum Übertragen des ersten Drehmomentes von der Kurbelwelle (15) an ein mit einem Antriebsrad (9-2) des Fahrzeuges (1) koppelbares Abtriebselement (4) und mittels eines - insbesondere automatisch - schaltbaren mehrstufigen Planetengetriebes (21) zu einer variablen Übersetzung ausgebildet ist, bei welcher:
- die Übersetzung des Planetengetriebes (21) über einen Gangwechsel und durch gesteuertes Verbinden und/oder Freigeben jeweiliger Sonnenräder (55, 56) entsprechender Planetenstufen (57, 58) über ein mit dem jeweiligen Sonnenrad (55, 56) drehfest gekoppeltes Mitnehmerelement (64) einstellbar ist,
- das jeweilige Mitnehmerelement (64) über einen steuerbaren Reibschluss mit einem Bremselement (66) steuerbar abbremsbar und arretierbar und/oder freigebbar ist und
- ein jeweiliges Bremselement (66) ein Bremsband (66') einer Bandbremse (60') ist oder aufweist, wobei
- für ein jeweiliges Bremsband (66') eine Stelleinrichtung (70), insbesondere als Spanneinrichtung, ausgebildet und so betätigbar eingerichtet ist, dass ein zugeordnetes Bremsband (66') (a) in mindestens einen mit dem zugeordneten Mitnehmerelement (64) in Eingriff stehenden und/oder reibenden Zustand und (b) in mindestens einen mit dem zugeordneten Mitnehmerelement (64) außer Eingriff stehenden und/oder nicht reibenden Zustand überführbar ist,
- wobei eine jeweilige Stelleinrichtung (70) ein Stellelement (71), eine Schwenkwelle (72), an welcher das Stellelement (71) drehfest montiert ist, und einen Antrieb (73) zum steuerbaren Antreiben der Schwenkwelle (72) zur Rotation um eine Schwenkachse aufweist und ein jeweiliges Stellelement (71) in Bezug auf die Schwenkwelle (72) in Umfangsrichtung zur Bestimmung eines in Eingriff stehenden und/oder reibenden Zustands und eines außer Eingriff stehenden und/oder nicht reibenden Zustands eine unterschiedliche radiale Ausdehnung aufweist, und wobei
- die Mehrzahl von Stellelementen (71) auf einer gemeinsamen Schwenkwelle (72) drehfest angeordnet und über einen gemeinsamen Antrieb (73) steuerbar zur Rotation antreibbar sind und
- die Stellelemente (71) mit ihren unterschiedlichen radialen Ausdehnungen bezüglich der gemeinsamen Schwenkwelle (72) und ihren Anordnungen auf der gemeinsamen Schwenkwelle (72) winkelmäßig in Umfangsrichtung für eine vorgegebene Gangwahlabfolge relativ zueinander angeordnet sind.

2. Antriebsanordnung (80) nach Anspruch 1,
bei welcher ein jeweiliges Mitnehmerelement (64) an einem oder als ein radial außen liegender oder äußerster Abschnitt einer mit dem jeweiligen Sonnenrad (55, 56) drehfest gekoppelten Bremsscheibe (65) oder Bremstrommel ausgebildet ist, insbesondere im Wesentlichen mit einer Kreisform oder Kreisringform im Querschnitt oder in Draufsicht in bzw. mit einer Ebene senkrecht zu einer Rotationsachse der Bremsscheibe (65) bzw. Bremstrommel, mit einem Speichenaufbau und/oder für einen Reibschluss an einer Außenumfangsfläche (65a).

3. Antriebsanordnung (80) nach einem der vorangehenden Ansprüche, bei welcher für ein jeweiliges Mitnehmerelement (64) ein Bremsband (66') in Eins-zu-eins-Zuordnung ausgebildet ist.

4. Antriebsanordnung (80) nach einem der vorhergehenden Ansprüche, bei welcher ein jeweiliges Stellelement (71)
- zu einem direkten und unmittelbaren Eingriff auf ein zugeordnetes Bremsband (66') zum Erzeugen eines gespannten bzw. eines gelösten Zustands des Bremsbandes (66') in Bezug auf ein zugeordnetes Mitnehmerelement (64) oder
- zu einem indirekten und mittelbaren Eingriff auf ein zugeordnetes Bremsband (66') zum Erzeugen eines gespannten bzw. eines gelösten Zustands des Bremsbandes (66') in Bezug auf ein zugeordnetes Mitnehmerelement (64) eingerichtet ist, insbesondere mittels eines über das Stellelement (71) betätigbaren Hebelmechanismus zum Spannen bzw. Entspannen des Bremsbandes (66').

5. Antriebsanordnung (80) nach einem der vorhergehenden Ansprüche, bei welcher zwischen einem Antrieb (73) einerseits und einer Schwenkwelle (72) und/oder einem Stellelement (71) andererseits ein Getriebe (74), insbesondere mit Selbsthemmung, und/oder ein Gesperre (75), insbesondere mit einer Haltefunktion, ausgebildet ist.

6. Antriebsanordnung (80) nach einem der vorangehenden Ansprüche, bei welcher:
- mehrere Mitnehmerelemente (64) über einen mechanisch selbstschaltenden Freilauf (59) mit einem jeweiligen Sonnenrad (55, 56) verbunden sind, insbesondere im Zusammenhang mit einem Drehrichtungswechsel der zugehörigen Sonnenräder (55, 56) bei einem Gangwechsel und/oder mit einem Festhalten der jeweiligen Mitnehmerelemente (64) in beiden Drehrichtungen, insbesondere durch eine Betätigeranordnung,
- das schaltbare mehrstufige Planetengetriebe (21) im Wesentlichen koaxial zur Drehachse (Y) der Kurbelwelle (15) ausgebildet ist,
- das Abtriebselement (4) rotationssymmetrisch und koaxial zur Drehachse (Y) der Kurbelwelle (15) und zum Planetengetriebe (21) ausgebildet ist und insbesondere ein Ketten- oder Zahnriemenblatt ist oder aufweist,
- eine erweiterte Anzahl an Gängen und/oder an schaltbaren Übersetzungen ausgebildet ist durch den Einsatz von einem oder von mehreren Freiläufen (59, 59-1), insbesondere für die Realisierung einer Übersetzung von 1:1, in einem Stufenplanetengetriebe (51) mit einer Übersetzung ins Schnelle, in der Gesamtübersetzung durch einen Direktgang und/oder in aktiv schaltbarer oder mechanisch selbstschaltender Art und Weise,
- bei welcher das Planetengetriebe (21) eine Mehrzahl von Gängen definiert, insbesondere mit einer Anzahl von sieben Gängen, mit Gangsprüngen, die konstant sind, nicht mehr als etwa 25 % bis etwa 27 % und/oder im Mittel etwa 26 % betragen, eine Gesamtspreizung von etwa 400 % definieren und/oder im Zusammenhang stehen mit einem zusätzlichen Direktgang und dem Einsatz eines Freilaufes (59), durch welchen in einem Planetengetriebe (51) mit einer Übersetzung ins Schnelle ein Sonnenrad (55) mit einem Planetensteg (22) verbindbar ist,
- Getriebeschaltstufen (50) des Planetengetriebes (21) gebildet werden von (i) einem ersten und insbesondere zweistufigen Planetengetriebe (51) mit Gesamtübersetzung ins Schnelle und (ii) einem dazu in Reihe geschalteten zweiten und insbesondere zweistufigen Planetengetriebe (52) mit Gesamtübersetzung ins Langsame, vorzugsweise in Form eines Stufenplanetengetriebes, und/oder
- (iii) den Getriebeschaltstufen (50) eine Hochtreiberstufe (40) mit einem oder in Form eines Planetengetriebes (41) mit Übersetzung ins Schnelle zur Reduktion eines hohen Fahrerdrehmomentes eingangsseitig vorgeschaltet ist und/oder (iv) die beiden in Reihe geschalteten Planetengetriebe (51, 52) der Getriebeschaltstufen (50) über ein gemeinsames Hohlrad (53) miteinander gekoppelt sind.

7. Antriebsanordnung (80) nach einem der vorangehenden Ansprüche, bei welcher
- ein elektrischer Antrieb (3) zum Erzeugen eines Motordrehmoments ausgebildet ist,
- der elektrische Antrieb (3) zum Übertragen des Motordrehmomentes über das Planetengetriebe (21) steuerbar an das Abtriebselement (4) koppelbar ist, und/oder
- der elektrische Antrieb (3) einen Hohlwellenmotor mit einer ausgangsseitigen Hohlwelle aufweist, wobei insbesondere
- der Hohlwellenmotor insgesamt oder zumindest mit seiner Hohlwelle koaxial zur Drehachse (Y) der Kurbelwelle (15), zum Planetengetriebe (21), zum eingangsseitigen Planetensteg (22) des Planetengetriebes (21) und/oder zu einem Sonnenrad (43) der Hochtreiberstufe (40) angeordnet ist und/oder
- die Hohlwelle mittelbar, vorzugsweise über ein Motorreduziergetriebe (30), oder unmittelbar mit dem eingangsseitigen Planetensteg (22) des Planetengetriebes (21) und/oder mit dem Sonnenrad (43) der Hochtreiberstufe (40) gekoppelt oder koppelbar ist.

8. Antriebsanordnung (80) nach Anspruch 7,
bei welcher zwischen dem elektrischen Antrieb (3) und dem Planetengetriebe (21) ein Motorreduziergetriebe (30) in Form eines mehrstufigen Stirnradgetriebes (32-34) oder eines Evoloidgetriebes und insbesondere mit oder aus Kunststoffmaterial ausgebildet ist.

9. Antriebsanordnung (80) nach Anspruch 7 oder 8,
welche den Aufbau eines Mittelmotorantriebs aufweist und insbesondere ein gemeinsames Gehäuse (14), in welchem das Planetengetriebe (21), der Stellantrieb (60), der elektrische Antrieb (3), das Motorreduziergetriebe (30) und - zumindest teilweise - die Kurbelwelle (15) aufgenommen sind.

10. Mit Muskelkraft und/oder - insbesondere zusätzlich - mit Motorkraft antreibbares Fahrzeug (1), Elektrofahrrad, eBike oder Pedelec, mit:
- mindestens einem Rad (9-1, 9-2) und
- einer Antriebsanordnung (80) nach einem der Ansprüche 1 bis 9 zum Antreiben des mindestens einen Rades (9-1, 9-2).

## Claims

1. Drive assembly (80) for a vehicle (1) which can be driven with muscle power and/or additionally with motor power, such as an electric bicycle, ebike or pedelec, having:
- a crankshaft (15) which can rotate about a rotational axis (Y) and has the purpose of receiving a first torque which is generated, in particular, with muscle power, and
- a transmission device (20) which is designed to transmit the first torque from the crankshaft (15) to an output element (4) which can be coupled to a drive wheel (9-2) of the vehicle (1), and to provide a variable transmission ratio by means of a multi-stage planetary gear mechanism (21), which can be shifted - in particular automatically -
in which:
- the transmission ratio of the planetary gear mechanism (21) can be adjusted by means of a gear speed change and by controlled connection and/or release of respective sun gears (55, 56) of corresponding planetary stages (57, 58) by means of a driver element (64) which is co-rotationally coupled to the respective sun gear (55, 56),
- the respective driver element (64) can be controllably braked and locked and/or released by means of controllable frictional engagement with a brake element (66), and
- a respective brake element (66) is or has a brake band (66') of a band brake (60'), wherein
- for a respective brake band (66') an actuating device (70) is embodied, in particular, as a clamping device, and is configured in such a way that it can be activated such that an assigned brake band (66') can be changed
(a) into at least one state in which it is in engagement with the assigned driver element (64) and/or experiencing friction, and
(b) into at least one state in which it is disengaged from the assigned driver element (64) and/or is not experiencing friction,
- wherein a respective actuating device (70) has an actuating element (71), a pivoting shaft (72), on which the actuating element (71) is co-rotationally mounted, and a drive (73) for controllably driving the pivoting shaft (72) to rotate about a pivot axis, and a respective actuating element (71) has a different radial extent with respect to the pivoting shaft (72) in the circumferential direction for the determination of a state in which it is in engagement and/or experiencing friction, and a state in which it is not in engagement and/or not experiencing friction, and wherein
- the multiplicity of actuating elements (71) are co-rotationally arranged on a common pivoting shaft (72) and can be controllably driven to rotate via a common drive (73), and
- the actuating elements (71) are arranged with their different radial extents at an angle relative to one another in the circumferential direction with respect to the common pivoting shaft (72) and their arrangements on the common pivoting shaft (72) for a specified gear speed selection sequence.

2. Drive arrangement (80) according to Claim 1,
in which a respective driver element (64) is formed on a outermost section or as a section which lies radially toward the outside, of a brake disc (65) or brake drum which is co-rotationally coupled to the respective sun gear (55, 56), in particular essentially with a circular shape or annular shape in cross section or in plan view in or with a plane perpendicular to a rotational axis of the brake disc (65) or brake drum, with a spoke structure and/or for frictional engagement on an outer circumferential face (65a).

3. Drive assembly (80) according to one of the preceding claims, in which a brake band (66') for a respective driver element (64) is embodied in a one-to-one assignment.

4. Drive assembly (80) according to one of the preceding claims, in which a respective actuating element (71) is configured
- for direct and immediate engagement with an assigned brake band (66') in order to generate a tensioned or released state of the brake band (66') with respect to an assigned driver element (64) or
- for indirect and non-immediate engagement with an assigned brake band (66') in order to generate a tensioned or released state of the brake band (66') with respect to an assigned driver element (64), in particular by means of a lever mechanism, which can be activated via the actuating element (71), in order to tension or release the brake band (66').

5. Drive assembly (80) according to one of the preceding claims,
in which a transmission (74), in particular with self-locking, and/or a locking mechanism (75), in particular with a securing function, is formed between a drive (73), on the one hand, and a pivoting shaft (72) and/or an actuating element (71), on the other.

6. Drive assembly (80) according to one of the preceding claims,
in which:
- a plurality of driver elements (64) are connected via a mechanically self-shifting freewheel (59) to a respective sun gear (55, 56), in particular in conjunction with a change of rotational direction of the associated sun gears (55, 56) when a gear speed change occurs and/or with securement of the respective driver elements (64) in both rotational directions, in particular by an activator arrangement,
- the shiftable, multi-stage planetary gear mechanism (21) is embodied essentially coaxially with respect to the rotational axis (Y) of the crankshaft (15),
- the output element (4) is embodied rotationally-symmetrically and coaxially with respect to the rotational axis (Y) of the crankshaft (15) and with respect to the planetary gear mechanism (21) and has, in particular, a chain ring or toothed belt ring,
- an extended number of gear speeds and/or of shiftable transmission ratios is formed via the use of one or more freewheels (59, 59-1), in particular for implementing a transmission ratio of 1:1, in a stepped planetary gear mechanism (51) with a step-up transmission ratio, in the overall transmission ratio by means of direct gear and/or in an actively shiftable or mechanically self-shifting fashion,
- in which the planetary gear mechanism (21) defines a multiplicity of gear speeds, in particular with a direct number of seven gear speeds, with gear speed jumps which are constant, are not more than approximately 25% to approximately 27% and/or on average approximately 26%, define an overall spread of approximately 400% and/or have a relationship to one another with an additional direct gear and the use of a freewheel (59) by which a sun gear (55) can be connected to a planetary web (22) in a planetary gear mechanism (51) with a step-up transmission ratio,
- transmission switching stages (50) of the planetary gear mechanism (21) are formed by (i) a first, in particular two-stage, planetary gear mechanism (51) with an overall step-up transmission ratio and (ii) a second, in particular two-stage, planetary gear mechanism (52) which is connected in series therewith and has an overall step-down transmission ratio, preferably in the form of a stepped planetary gear mechanism, and/or
- (iii) on the input side connected upstream of the transmission switching stages (50) is a high-driver stage (40) with or in the form of a planetary gear mechanism (41) with a step-up transmission ratio in order to reduce a high driver torque and/or (iv) the two planetary gear mechanisms (51, 52), connected in series, of the transmission switching stages (50) via a common ring gear (53) are coupled to one another.

7. Drive assembly (80) according to one of the preceding claims,
in which
- an electric drive (3) is designed to generate an engine torque,
- the electric drive (3) can be coupled to the output element (4) in such a way that it can be controlled via the planetary gear mechanism (21), in order to transmit the engine torque, and/or
- the electric drive (3) has a hollow shaft motor with an output-side hollow shaft, wherein, in particular,
- the hollow shaft motor is arranged in its entirety or at least with its hollow shaft coaxially with respect to the rotational axis (Y) of the crankshaft (15), with respect to the planetary gear mechanism (21), with respect to the input-end planetary web (22) of the planetary gear mechanism (21) and/or with respect to a sun gear (43) of the high driver stage (40), and/or
- the hollow shaft is or can be coupled indirectly, preferably via a motor reduction gear (30), or directly, to the input-end planetary web (22) of the planetary gear mechanism (21) and/or to the sun gear (43) of the high driver stage (40).

8. Drive assembly (80) according to Claim 7,
in which the motor reduction gear (30) in the form of a multistage spur gear mechanism (32-34) or an evoloid gear mechanism and, in particular, with or made of plastic material, is formed between the electric drive (3) and the planetary gear mechanism (21).

9. Drive assembly (80) according to Claim 7 or 8, which has the design of a mid-mounted motor drive and, in particular, a common housing (14) in which the planetary gear mechanism (21), the servo drive (60), the electric drive (3), the motor reduction gear (30) and - at least partially - the crankshaft (15) are accommodated.

10. Vehicle (1), electric bicycle, ebike or pedelec, which can be driven with muscle power and/or, in particular, with motor power, having:
- at least one wheel (9-1, 9-2) and
- a drive assembly (80) according to one of Claims 1 to 9 for driving the at least one wheel (9-1, 9-2).

## Revendications

1. Agencement d'entraînement (80) pour un véhicule (1) pouvant être entraîné par une force musculaire et/ou en plus par une force de moteur, tel qu'un vélo électrique, un vélo à assistance électrique ou un pédélec, comportant :
- un vilebrequin (15) pouvant tourner autour d'un axe de rotation (Y) pour recevoir un premier couple produit en particulier par une force musculaire et
- un dispositif de transmission (20), lequel est réalisé de manière à transmettre le premier couple du vilebrequin (15) à un élément de sortie (4) pouvant être accouplé à une roue d'entraînement (9-2) du véhicule (1) et au moyen d'un engrenage planétaire (21) à plusieurs étages, commutable, en particulier automatiquement, en vue d'une transmission variable,
dans lequel :
- la transmission de l'engrenage planétaire (21) peut être réglée par le biais d'un changement de vitesses et par une liaison et/ou une libération commandées de pignons planétaires (55, 56) respectifs d'étages planétaires (57, 58) correspondants par le biais d'un élément d'entraînement (64) accouplé de manière solidaire en rotation au pignon planétaire (55, 56) respectif,
- l'élément d'entraînement (64) respectif peut être freiné et peut être bloqué et/ou peut être libéré de manière commandable par le biais d'une liaison par friction commandable avec un élément de freinage (66) et
- un élément de freinage (66) respectif est ou comprend une bande de freinage (66') d'un frein à bande (60'), dans lequel
- pour une bande de freinage (66) respective, un dispositif de réglage (70), en particulier en tant que dispositif de tension, est réalisé et conçu de manière à pouvoir être actionné de telle sorte qu'une bande de freinage (66') associée peut être transférée
(a) à au moins un état en prise avec l'élément d'entraînement associé (64) et/ou de friction et
(b) à au moins un état hors de prise avec l'élément d'entraînement associé (64) et/ou de non friction,
- dans lequel un dispositif de réglage (70) respectif comprend un élément de réglage (71), un arbre de pivotement (72), sur lequel l'élément de réglage (71) est monté de manière solidaire en rotation, et un entraînement (73) pour l'entraînement de manière commandable de l'arbre de pivotement (72) pour la rotation autour d'un axe de pivotement et un élément de réglage (71) respectif présentant, par rapport à l'arbre de pivotement (72) dans la direction périphérique, pour la détermination d'un état en prise et/ou de friction et d'un état hors de prise et/ou de non friction, une étendue radiale différente et dans lequel
- la pluralité d'éléments de réglage (71) sont disposés de manière solidaire en rotation sur un arbre de pivotement (72) commun et peuvent être entraînés en rotation de manière commandable par le biais d'un entraînement (73) commun et
- les éléments de réglage (71) sont disposés les uns par rapport aux autres avec leurs étendues radiales différentes par rapport à l'arbre de pivotement (72) commun et leurs agencements sur l'arbre de pivotement (72) commun de manière angulaire dans la direction périphérique pour une séquence de sélection de vitesses.

2. Agencement d'entraînement (80) selon la revendication 1,
dans lequel un élément d'entraînement (64) respectif est réalisé au niveau d'une partie située radialement à l'extérieur ou le plus à l'extérieur, ou en tant que telle partie, d'un disque de frein (65) ou tambour de frein accouplé de manière solidaire en rotation au pignon planétaire (55, 56) respectif, en particulier sensiblement avec une forme circulaire ou une forme circulaire annulaire en section transversale ou en vue de dessus dans ou avec un plan perpendiculaire à un axe de rotation du disque de frein (65) ou tambour de frein, avec une configuration à rayons et/ou pour une liaison par friction au niveau d'une surface périphérique extérieure (65a).

3. Agencement d'entraînement (80) selon l'une des revendications précédentes,
dans lequel, pour un élément d'entraînement (64) respectif, une bande de freinage (66') est réalisée dans une association biunivoque.

4. Agencement d'entraînement (80) selon l'une des revendications précédentes, dans lequel un élément de réglage (71) respectif est conçu
- pour une entrée en prise directe et immédiate sur une bande de freinage (66') associée pour produire un état tendu ou un état relâché de la bande de freinage (66') par rapport à un élément d'entraînement (64) associé ou
- pour une entrée en prise indirecte et médiate sur une bande de freinage (66') associée pour produire un état tendu ou un état relâché de la bande de freinage (66') par rapport à un élément d'entraînement (64) associé, en particulier au moyen d'un mécanisme à levier pouvant être actionné par le biais de l'élément de réglage (71) pour la tension ou la détente de la bande de freinage (66').

5. Agencement d'entraînement (80) selon l'une des revendications précédentes,
dans lequel un engrenage (74), en particulier à blocage automatique, et/ou un mécanisme de blocage (75), en particulier à fonction de maintien, sont réalisés entre un entraînement (73) d'une part et un arbre de pivotement (72) et/ou un élément de réglage (71) d'autre part.

6. Agencement d'entraînement (80) selon l'une des revendications précédentes,
dans lequel :
- plusieurs éléments d'entraînement (64) sont reliés à un pignon planétaire (55, 56) respectif par le biais d'une roue libre (59) à commutation automatique mécaniquement, en particulier en rapport avec un changement de sens de rotation des pignons planétaires (55, 56) associés en cas de changement de vitesses et/ou avec une fixation des éléments d'entraînement (64) respectifs dans les deux sens de rotation, en particulier au moyen d'un ensemble d'actionnement,
- l'engrenage planétaire à plusieurs étages commutable (21) est réalisé de manière sensiblement coaxiale par rapport à l'axe de rotation (Y) du vilebrequin (15),
- l'élément de sortie (4) est réalisé de manière à présenter une symétrie de révolution et de manière coaxiale par rapport à l'axe de rotation (Y) du vilebrequin (15) et par rapport à l'engrenage planétaire (21) et est ou comprend en particulier un plateau de chaîne ou un plateau de courroie dentée,
- un nombre accru de vitesses et/ou de rapports de transmission commutables est formé par l'utilisation d'une ou de plusieurs roues libres (59, 59-1), en particulier pour la réalisation d'un rapport de transmission de 1:1, dans un engrenage planétaire étagé (51) à multiplication, dans le rapport de transmission total par une prise directe et/ou de manière commutable activement ou à commutation automatique mécaniquement,
- dans lequel l'engrenage planétaire (21) définit une pluralité de vitesses, en particulier avec un nombre de sept vitesses, avec des changements de vitesses qui sont constants, ne valent pas plus d'environ 25 % à environ 27 % et/ou en moyenne environ 26 %, définissent un échelonnement total d'environ 400 % et/ou sont en rapport avec une prise directe supplémentaire et l'utilisation d'une roue libre (59), au moyen de laquelle un pignon planétaire (55) peut être relié à un porte-satellites (22) dans un engrenage planétaire (51) à multiplication,
- des étages de commutation d'engrenage (50) de l'engrenage planétaire (21) sont formés par (i) un premier engrenage planétaire (51) en particulier à deux étages à rapport de transmission total de multiplication et (ii) un deuxième engrenage planétaire (52) en particulier à deux étages monté en série avec celui-ci et à rapport de transmission total de démultiplication, de préférence sous la forme d'un engrenage planétaire étagé, et/ou
- (iii) un étage multiplicateur (40) doté ou sous la forme d'un engrenage planétaire (41) à multiplication pour la réduction d'un couple de conducteur élevé côté entrée est monté en amont des étages de commutation d'engrenage (50) et/ou (iv) les deux engrenages planétaires (51, 52) montés en série des étages de commutation d'engrenage (50) sont accouplés l'un à l'autre par le biais d'une couronne (53) commune.

7. Agencement d'entraînement (80) selon l'une des revendications précédentes,
dans lequel
- un entraînement électrique (3) est réalisé pour produire un couple de moteur,
- l'entraînement électrique (3) peut être accouplé à l'élément de sortie (4) de manière commandable par le biais de l'engrenage planétaire (21) pour la transmission du couple de moteur, et/ou
- l'entraînement électrique (3) comprend un moteur à arbre creux doté d'un arbre creux côté sortie, dans lequel en particulier
- le moteur à arbre creux est disposé dans l'ensemble ou au moins par son arbre creux de manière coaxiale par rapport à l'axe de rotation (Y) du vilebrequin (15), par rapport à l'engrenage planétaire (21), par rapport au porte-satellites (22), côté entrée, de l'engrenage planétaire (21) et/ou par rapport à un pignon planétaire (43) de l'étage multiplicateur (40) et/ou
- l'arbre creux est accouplé ou peut être accouplé indirectement, de préférence par le biais d'un moto-réducteur (30), ou directement au porte-satellites (22), côté entrée, de l'engrenage planétaire (21) et/ou au pignon planétaire (43) de l'étage multiplicateur (40).

8. Agencement d'entraînement (80) selon la revendication 7,
dans lequel un moto-réducteur (30) est réalisé sous la forme d'un engrenage à pignons droits à plusieurs étages (32-34) ou d'un engrenage à développante entre l'entraînement électrique (3) et l'engrenage planétaire (21) et est en particulier doté ou constitué de matière synthétique.

9. Agencement d'entraînement (80) selon la revendication 7 ou 8,
lequel présente la configuration d'un entraînement à moteur central et en particulier un carter (14) commun, dans lequel l'engrenage planétaire (21), l'entraînement de réglage (60), l'entraînement électrique (3), le moto-réducteur (30) et, au moins partiellement, le vilebrequin (15) sont logés.

10. Véhicule (1) pouvant être entraîné par une force musculaire et/ou, en particulier en plus, par une force de moteur, vélo électrique, vélo à assistance électrique ou pédélec, comportant :
- au moins une roue (9-1, 9-2) et
- un agencement d'entraînement (80) selon l'une des revendications 1 à 9 pour l'entraînement de l'au moins une roue (9-1, 9-2).
